(19) 

Europäisches
Patentamt
European
Patent Office
Office européen
des brevets

(11) **EP 4 425 398 A1**

(12) **EUROPEAN PATENT APPLICATION**

(43) Date of publication:
**04.09.2024 Bulletin 2024/36**

(21) Application number: **24158731.0**

(22) Date of filing: **20.02.2024**

(51) International Patent Classification (IPC):
***G06Q 10/0635*** (2023.01)    ***G06Q 10/10*** (2023.01)
***G06Q 30/018*** (2023.01)

(52) Cooperative Patent Classification (CPC):
**G06Q 10/0633; G06Q 10/08; G06Q 30/018;
G06Q 30/0185**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023  JP 2023029983**

(71) Applicant: **TOYOTA JIDOSHA KABUSHIKI
KAISHA
Toyota-shi, Aichi-ken, 471-8571 (JP)**

(72) Inventors:
• **FUJIWARA, Teruyoshi
  Aichi-ken, 471-8571 (JP)**
• **NITTA, Iwao
  Aichi-ken, 471-8571 (JP)**
• **SUZUKI, Ryota
  Aichi-ken, 451-6015 (JP)**

(74) Representative: **Cabinet Beau de Loménie
158, rue de l'Université
75340 Paris Cedex 07 (FR)**

(54) **INFORMATION PROCESSING APPARATUS AND INFORMATION PROCESSING METHOD**

(57)    An information processing apparatus (1) includes a processor (11). The processor (11) accepts a request for setting a permission of disclosure of information relating to a first product of a first company to a second company from an account of the first company. The processor (11) acquires first information relating to the second company. The processor (11) specifies a first output aspect of a warning for first processing of giving the warning in response to the request based on the first information. The processor (11) executes the first processing in the first output aspect.

FIG. 14

EP 4 425 398 A1

**Description**

1. Field of the Invention

The present disclosure relates to an information processing apparatus and an information processing method related to information sharing between companies configuring a supply chain.

2. Description of Related Art

A system that shares information between a plurality of companies configuring a supply chain has been known. Regarding the above, for example, Japanese Unexamined Patent Application Publication 2017-500663 discloses a system that shares item information between adjacent suppliers.

SUMMARY OF THE INVENTION

The present disclosure provides an information processing apparatus and an information processing method capable of reducing human error when information is disclosed to another company.

One aspect of the present disclosure is an information processing apparatus including a processor. The processor is configured to accept a request for setting a permission of disclosure of information relating to a first product of a first company to a second company from an account of the first company. The processor is configured to acquire first information relating to the second company. The processor is configured to specify a first output aspect of a warning for first processing of giving the warning in response to the request based on the first information. The processor is configured to execute the first processing in the first output aspect.

Another aspect of the present disclosure is an information processing method performed by a processor. The method includes: accepting a request for setting a permission of disclosure of information relating to a first product of a first company to a second company from an account of the first company; acquiring first information relating to the second company; specifying a first output aspect of a warning for first processing of giving the warning in response to the request based on the first information; and executing the first processing in the first output aspect.

As another aspect, a program for causing a processor to execute the method or a computer-readable storage medium that stores therein the program in a non-transitory manner are listed.

According to the present disclosure, it becomes possible to reduce human error when information is disclosed to another company.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram explaining a supply chain according to a first embodiment;
FIG. 2 is one example of a product tree;
FIG. 3 is one example of a product tree based on the setting of a permission of disclosure;
FIG. 4 is a diagram schematically showing one example of a hardware configuration of a server apparatus;
FIG. 5 is a diagram schematically showing one example of a hardware configuration of a company terminal according to the first embodiment;
FIG. 6 is a diagram schematically showing a software configuration of the server apparatus;
FIG. 7 is one example of product information;
FIG. 8 is a diagram schematically showing a software configuration of the company terminal;
FIG. 9 is one example of a disclosure permission setting screen of the company terminal;
FIG. 10 is one example of the disclosure permission setting screen of the company terminal;
FIG. 11 is a diagram showing a flow of processing related to the setting of the permission of disclosure of the product information in an information sharing system;
FIG. 12 is one example of an output aspect of a warning output on a screen of the company terminal in response to a request for setting the permission of disclosure;
FIG. 13 is one example of an output aspect of a warning output on the screen of the company terminal in response to a request for setting the permission of disclosure;
FIG. 14 is one example of an output aspect of a warning output on the screen of a company terminal in response to a request for setting the permission of disclosure;
FIG. 15 is one example of a flowchart of request acceptance processing of the server apparatus;
FIG. 16 is one example of a score table that defines scores showing the highness of credibility of a disclosure destination company;
FIG. 17 is one example of a YES/NO chart for determining the highness of credibility of the disclosure destination company;
FIG. 18 is one example of a correspondence table between credibility levels and output aspects; and
FIG. 19 is a diagram showing one example of inputs and outputs of a model determining the output aspects of the warning.

DETAILED DESCRIPTION OF EMBODIMENTS

In recent years, there has been a demand for tracking the amount of greenhouse gas emitted when products such as automobiles are manufactured, in other words, tracking a carbon footprint, for example.

Here, a case in which a target product is supplied by a supply chain including a plurality of companies is conceived. Each company (supplier) included in the supply chain produces a plurality of parts and the like configuring the target product and delivers the parts and the like to a company in the next process. The companies repeat the above, and a final product is assembled in the final process.

The supply chain is configured by an original equipment manufacturing (OEM) manufacturer and a plurality of suppliers. The OEM manufacturer is a company that assembles a final product. The supplier is a company that supplies parts, raw materials, assemblies, and the like for producing the final product.

In the description below, parts and the like produced by each of the plurality of suppliers is referred to as "products". An end product supplied to consumers is referred to as an "end product". Suppliers and OEM manufacturers included in the supply chain are simply referred to as "companies". Each of a plurality of hierarchies included in the supply chain is referred to as a "Tier".

In such a system, in order to calculate the total amount of greenhouse gas emitted in association with the manufacturing of the end product, for example, a supply relationship of products between the plurality of companies needs to be clarified. This is because the total amount of greenhouse gas emitted in a plurality of processes cannot be correctly calculated when the relationship between the plurality of products configuring the end product is not clear. The supply relationship of the products between the plurality of companies can be clarified as a result of generating a tree showing the supply relationship between the products configuring the end product, for example.

Information indicating the supply relationship of products between the companies is acquired by being supplied from each supplier, for example. However, detailed information relating to a business partner of own company and a product of own company and information such as a source of the material of the product of own company are sensitive information, and hence it is desired to limit those to whom the information is disclosed. When the disclosure setting of the information is manually performed, there may be a case in which information is disclosed to an undesired disclosure destination or a case in which information not intended to be disclosed is also disclosed, for example, due to human error.

One aspect of the present disclosure is an information processing apparatus capable of reducing human error in information disclosure. The information processing apparatus includes a control unit. The control unit accepts a request for setting a permission of disclosure of information relating to a first product of a first company to a second company from an account of the first company, acquires first information relating to the second company, specifies a first output aspect of a warning for first processing of giving the warning in response to the request based on the first information, and executes the first processing in the first output aspect.

The information processing apparatus is a computer that operates as a server, for example. The control unit is a processor such as a central processing unit (CPU), a graphics processing unit (GPU), or a digital signal processor (DSP), for example. The first company and the second company may be OEM manufacturers or suppliers, for example. The first product may be any of an end product, a part, a raw material, a material, and the like. An output aspect of the warning is a message, an image, a voice, or a combination of a message, an image, and a voice, for example. The output aspect of the warning may include an aspect that does not output a warning.

According to one aspect of the present disclosure, a warning is given by an output aspect based on the first information relating to the second company when a request for setting the permission of disclosure of information relating to the first product from the account of the first company to the second company is accepted. It becomes possible to call attention with the account of the first company as to whether the information relating to the first product may be disclosed to the second company before the disclosure of the information relating to the first product to the second company is set. As a result, human error that occurs when the disclosure of the information relating to the first product to the second company is set can be reduced.

In one aspect of the present disclosure, the control unit may specify the first output aspect on the basis of the first information relating to the second company out of a plurality of output aspects each having a different strength of warning for the first processing. The output aspects for the first processing may include at least an output aspect of displaying a preview of a display screen including the information relating to the first product when access is performed from an account of the second company.

In the case of a message, for example, the strength of the warning is expressed by the content of the message, the size of characters, the character color, the font, highlighting, boldface, and the like. Examples of the content of a message of a weak warning include a message that does not include wording directly indicating a warning such as "disclosure setting is performed". Examples of the content of a message of a strong warning include a message that includes wording that strongly requests the disclosure setting to be confirmed or indicating a direct warning such as "Are you sure you want to perform disclosure to the second company?" or "CAUTION!!". As the warning becomes stronger, the characters may be enlarged, the color may be changed, a font that gives a stronger impression may be used, a highlight may be applied, or display in boldface may be performed. The output aspect of the warning may become stronger in the order of a message, a message and an image, a message and a voice, and a message, a voice, and an image. The output aspect of the warning is not limited to the above. For example, output aspects of repeatedly displaying a message a predetermined number of times and changing the position in which the message is repeatedly displayed may be included.

By including a preview of a display screen of information relating to the first product when access is performed from the account of the second company in the plurality of output aspects of the warning, it becomes possible to cause a user of the account of the first company to recognize how the information relating to the first product is seen from the account of the second company. In this case, for example, it may become possible to notice the inclusion of information that is not intended to be disclosed to the second company out of the information relating to the first product, and a case in which unintended information is disclosed can be reduced.

In one aspect of the present disclosure, the control unit may determine a highness of credibility of the second company based on the first information relating to the second company. In this case, the control unit may specify the first output aspect to be an output aspect having a stronger strength of warning as a highness of credibility of the second company becomes lower. The highness of credibility of the second company may be calculated as a score or may be indicated by level on the basis of the first information relating to the second company, for example. Alternatively, the first output aspect may be specified with use of a model in which the relationship between the information relating to the company and the output aspect of the first processing is constructed such that the output aspect of the warning becomes stronger as the credibility of the company becomes lower.

When the credibility of the second company is low, there is a possibility that the disclosure of the information relating to the first product to the second company may be unintended. Therefore, a warning is output in an output aspect in accordance with the highness of credibility of the second company before the setting of the permission of disclosure of the information. As a result, a stronger warning is given as the credibility of the second company becomes lower. Thus, it becomes possible to cause the user to pay more attention to the disclosure destination and the disclosure content.

In one aspect of the present disclosure, the first information relating to the second company may include at least one of information relating to a social credibility of the second company or information relating to a credibility of the second company seen from the first company. The information relating to the social credibility of the second company may include information relating to the attribute of the second company. The information relating to the attribute of the second company is a country in which the headquarters of the second company are located, a country in which an address of a representative director is included, the number of years since establishment, the number of employees, and the number of bases, for example. The information relating to the attribute of the second company may be information relating to the second company acquired from a public institution or information relating to the second company disclosed on the web and the like, for example. The information relating to the second company acquired from the public institution is information described in a certificate of registered matters of the second company, for example. The information relating to the second company acquired from the public institution has a higher accuracy.

It becomes possible to determine the highness of the social credibility of the second company by using the information relating to the social credibility of the second company. For example, the credibility of the second company is determined to be low when the country in which the headquarters of the second company are located is a country in which there are concerns in terms of carrying out trading considering the world situation. As a result, when the user of the account of the first company sets the permission of disclosure of the information to the second company, it becomes possible to call the attention of the user of the first company in a stronger manner by outputting a warning in an output aspect with a strength based on the highness (lowness) of credibility based on the country to which the second company belongs.

The information relating to the credibility of the second company seen from the first company may include at least one of information relating to a trading relationship between the first company and the second company or information relating to a state of a disclosure setting of information relating to a product between the first company and the second company. The information relating to the trading relationship between the first company and the second company may include at least one of information indicating whether there is a product that is directly traded between the first company and the second company and information indicating whether the first company and the second company are included in a supply chain for a third product.

When there is a product that is directly traded between the first company and the second company, it is indicated that the first company and the second company are already connected to each other and a trusting relationship is expected to be built. Meanwhile, when the first company and the second company are included in the supply chain for the third product, for example, the first company and the second company may be handling the same types of parts and are expected to be in a competing relationship with each other. There is a high possibility that the information relating to the product may not be desired to be disclosed between companies in a competing relationship. Therefore, when the first company and the second company are included in the supply chain for the third product, the credibility of the second company may be determined to be lower when seen from the first company.

The information relating to the state of the disclosure setting of the information of the product between the first company and the second company may include at least one of whether there is a shared storage region used by the first company and the second company for the transmission and reception of information relating to the product in a storage region managed by the information processing apparatus, whether the privilege to write in a dedicated storage region retaining information relating to a product of one company is given to the other company, or there is a history of an invitation to a system to which the information processing apparatus belongs from one company to the other company, for example. Those pieces of information indicate that there is already communication between the first company and the second company in the system to which the information processing apparatus belongs and the first company and the second company have a creditable relationship with each other.

Therefore, the control unit may determine the highness of credibility of the second company by giving priority to the information relating to the state of the disclosure setting of the information relating to the product between the first company and the second company over the information relating to the trading relationship between the first company and the second company when the first information relating to the second company includes the information relating to the credibility of the second company seen from the first company. The expression of "giving priority" means to set the weight when the highness of credibility is determined to be greater or to use one piece of information first to determine the highness of credibility when there are two pieces of information, for example. This is because the information relating to the state of the disclosure setting of the information of the product between the first company and the second company is information indicating that the first company and the second company have a creditable relationship with each other in the system to which the information processing apparatus belongs.

Specific embodiments of the present disclosure are described below with reference to the drawings. A hardware configuration, a module configuration, a functional configuration, and the like described in each embodiment should not be interpreted to limit the technical scope of the disclosure unless particularly noted.

First Embodiment

An information sharing system 100 according to a first embodiment is a system that provides information relating to a product supplied by a supply chain including a plurality of companies. The information relating to the product is typically information relating to traceability.

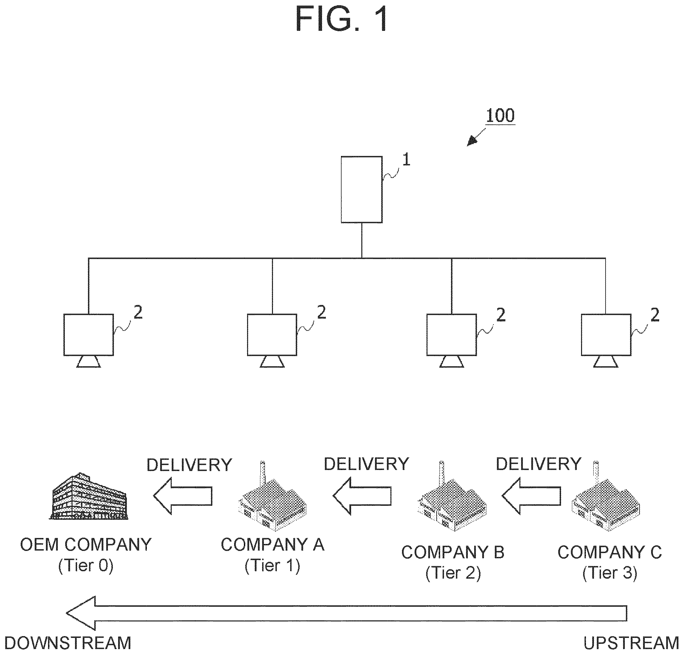

First, a structure of the supply chain is described. FIG. 1 is a diagram explaining a supply chain according to the first embodiment. The supply chain according to the first embodiment includes an OEM company and a plurality of companies that are suppliers. The OEM company is a company that assembles an end product, and the companies (companies A to C) that are the suppliers are companies that supply parts, raw materials, assemblies, or the like for manufacturing the end product. Each of the companies that are the suppliers produce a plurality of products and deliver those products to a company positioned in a hierarchy that is one level lower. A plurality of companies repeat the above, and a final product is assembled in the final process.

In the first embodiment, the side that delivers a product in a certain hierarchy is referred to as the upstream side and the side that purchases the product and produces a new product is referred to as the downstream side. In the present specification, the company positioned in the upstream side is referred to as an upstream company, and the company positioned in the downstream side is referred to as a downstream company. The product produced by the upstream company is referred to as an upstream product, and the product produced by the downstream company is referred to as a downstream product. An upstream product is included in the downstream product.

In the first embodiment, hierarchies included in the supply chain are referred to as Tiers (tiers). Tier 0 is a hierarchy in the lowermost layer (corresponding to the OEM company) that assembles the final product and transition is made to the upstream side as progress is made in the order of Tier 1, Tier 2, and Tier 3. The downstream company may change to the upstream company depending on the hierarchy that is focused on. For example, a company B positioned in Tier 2 is a downstream company in the relationship with Tier 3 but is an upstream company in the relationship with Tier 1. As above, the definitions of the upstream company and the downstream company may change for each hierarchy.

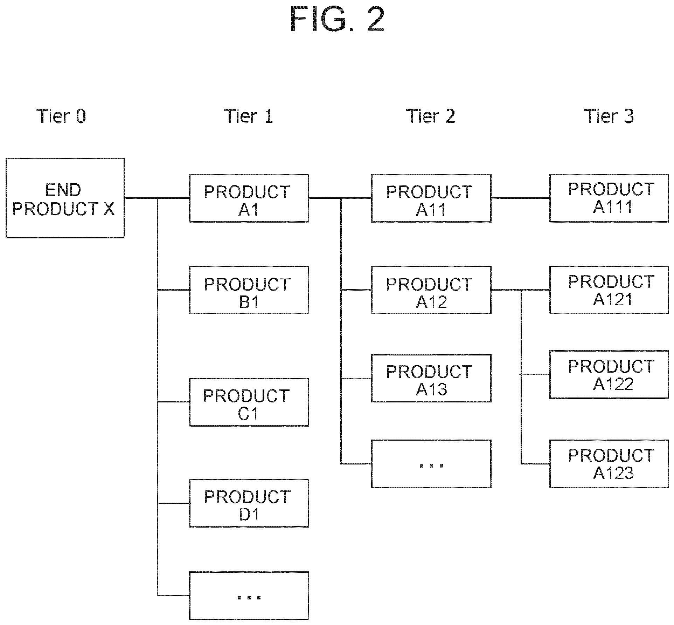

A server apparatus 1 according to the first embodiment collects information (hereinafter referred to as product information) relating to a product produced by each company and information for linking the product information to each other from a terminal (company terminal 2) corresponding to each company and generates a product tree as that shown in FIG. 2 described later on the basis of those pieces of information. The product information includes information relating to traceability (For example, information relating to the emission amount of greenhouse gas. Hereinafter referred to as traceability-related information), and a carbon footprint and the like can be tracked by tracing the product tree.

As shown in FIG. 1, the information sharing system 100 according to the first embodiment includes the server apparatus 1 and a plurality of company terminals 2. The company terminals 2 are terminals corresponding to the plurality of companies configuring the supply chain, respectively. The company terminals 2 included in the information sharing system 100 can be provided in a plurality of numbers. The server apparatus 1 collects information for generating a product tree from each of the company terminals 2 and generates a product tree on the basis of those pieces of information. The server apparatus 1 can execute processing relating to traceability on the basis of the generated product tree (typically, processing of calculating the emission amount of carbon dioxide and the like). The execution result of the processing can be transmitted to the company terminal 2.

FIG. 2 is one example of a product tree. The product tree is a tree diagram showing the relationship between products supplied by the supply chain. In the example shown in FIG. 2, a supply relationship of a plurality of products configuring an end product X is expressed by a tree diagram. In the example shown in FIG. 2, the end product X is produced by assembling products A1, BI, C1, D1.... The product A1 is produced by assembling products A11, A12, A13···. As above, the relationship of the products configuring the end product can be expressed by a tree diagram in which the individual products are nodes.

The company terminal 2 corresponding to each company transmits product information of a product produced by own company to the server apparatus 1 in order to generate a product tree. Each piece of product information is stored in the server apparatus 1.

The operation for linking the pieces of product information stored in the server apparatus 1 to each other is performed by the company terminal 2. Specifically, a person in charge in the downstream company logs into the server apparatus 1 from the company terminal 2 with use of an account of the downstream company and selects an upstream product to which a downstream product that is own company product is to be linked. As above, the linking between the product information is performed from the downstream product to the upstream product. The server apparatus 1 links the pieces of product information to each other on the basis of the selection and stores the linking information therein. The server apparatus 1 generates a product tree for the end product X by referring to the linking information.

For example, a company that supplies the product A1 included in the supply chain for the end product X is the company A. When the entire product tree of the end product X as shown in FIG. 2 is disclosed to the company A, information relating to other companies configuring the supply chain and products produced by those companies is also disclosed. Even when the company A is included in the supply chain for the end product X, it is inappropriate to disclose companies and products for which direct trading is not performed to the company A that is one supplier.

Thus, in the information sharing system 100 according to the first embodiment, the company that is the disclosure source (access allowing company) limits the range by which product information is disclosed by specifying the company that is the disclosure destination (access allowed company) and the product information to be disclosed and by giving the company that is the disclosure destination a privilege of access to the product information. For example, a privilege of access to product information of an upstream product is given to a downstream company from the upstream company in advance, and the downstream company is permitted to refer to the product information in a product tree within a range to which privilege is given. The action of giving the privilege of access to the product information is hereinafter referred to as the permission of disclosure, the setting of the permission of disclosure, or the like.

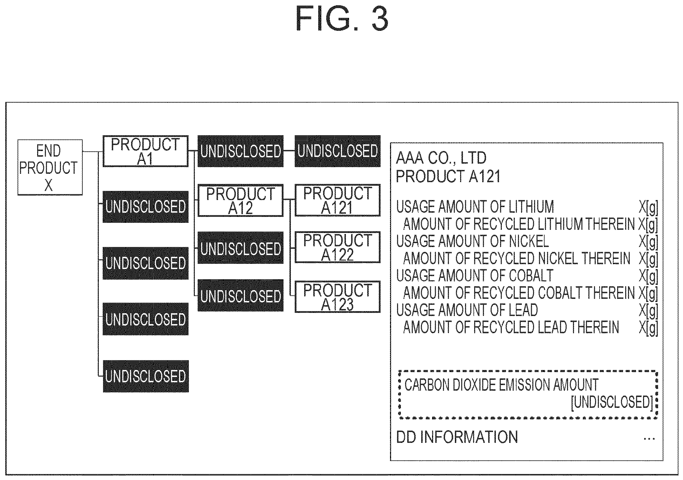

FIG. 3 is one example of a product tree based on the setting of a permission of disclosure. In the example shown in FIG. 3, the product to which the account of the company viewing the product tree shown in FIG. 3 does not have the privilege of access (the permission of disclosure is not given) is displayed as "undisclosed" in the product tree. Detailed information or the existence itself of undisclosed products is hidden to the account of the company that is viewing.

The setting of the permission of disclosure is not limited to being set to the product itself and can also be set in units of items included in the product information. In FIG. 3, an item for which the permission of disclosure is not set is indicated by a dotted line. In FIG. 3, the emission amount of carbon dioxide when a product A121 is produced is indicated to be private and is hidden. Even when there are products or items for which the privilege of access in not given in the product tree, the integration of the traceability-related information described above is executed without being affected by those products or items. For example, in the illustrated example, the emission amount of carbon dioxide is private for the product A121, but does not affect processing of calculating the total emission amount of carbon dioxide for the product A12.

In the first embodiment, when the server apparatus 1 receives a request for setting a permission of disclosure of the product information to a disclosure destination that is a predetermined company from the company terminal 2, the server apparatus 1 executes a warning for confirmation regarding the disclosure of the product information to the specified company. The server apparatus 1 specifies the output aspect of the warning on the basis of the information relating to the credibility of the disclosure destination company. As a result, human error such as a case in which information is disclosed to an unintended disclosure destination and a case in which unintended information is disclosed to the disclosure destination can be reduced.

Hardware Configuration

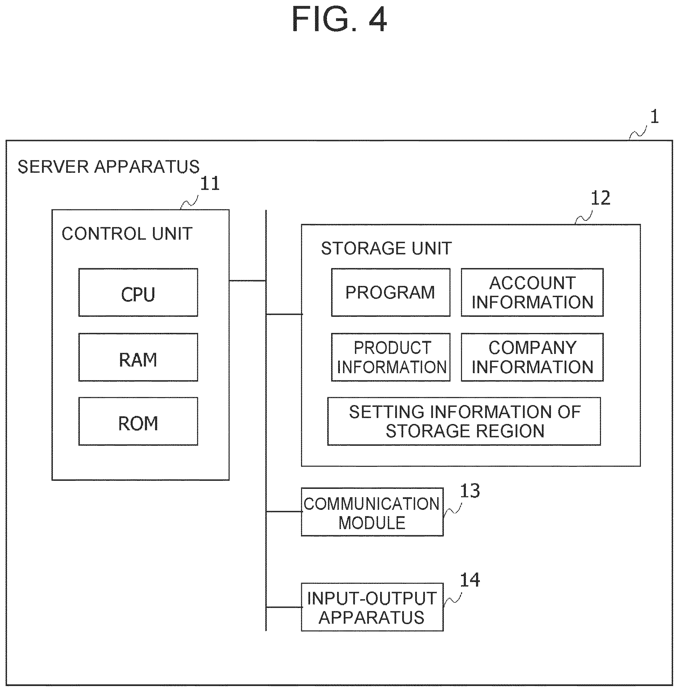

FIG. 4 is a diagram schematically showing one example of a hardware configuration of the server apparatus 1. The server apparatus 1 is configured as a computer having a control unit 11, a storage unit 12, a communication module 13, and an input-output apparatus 14.

The server apparatus 1 can be configured as a computer having a processor such as a CPU and GPU, a main storage apparatus such as a RAM and a ROM, and an auxiliary storage apparatus such as an EPROM, a hard disk drive, and a removable media. An operating system (OS), various programs, various tables, and the like are stored in the auxiliary storage apparatus, and each function that matches a predetermined purpose as described later can be realized when the programs stored therein are executed. However, some or all of the functions may be realized by a hardware circuit such as an ASIC and a field-programmable gate array (FPGA).

The control unit 11 is an arithmetic unit that realizes various functions of the server apparatus 1 by executing predetermined programs. The control unit 11 can be realized by a hardware processor such as a CPU, for example. The control unit 11 may include a RAM, a read only memory (ROM), a cache memory, and the like.

The storage unit 12 is a unit for storing information therein and is configured by a storage medium such as a RAM, a magnetic disk, and a flash memory. In the storage unit 12, a program executed by the control unit 11 and data and the like used by the programs are stored. In the storage unit 12, a database is constructed. In the database, product information collected from the plurality of company terminals 2, account information relating to the companies, company information relating to the companies, and setting information of the storage region are stored. Details are described later.

The communication module 13 is a communication interface for connecting the server apparatus 1 to a network. The communication module 13 includes a network interface board and a wireless communication interface for wireless communication, for example. The server apparatus 1 can perform data communication with another computer (for example, each company terminal 2) via the communication module 13.

The input-output apparatus 14 is a unit for accepting an input operation performed by an operator and presenting information to the operator. Specifically, the input-output apparatus 14 includes apparatuses for performing input such as a mouse and a keyboard and apparatuses for performing output such as a display and a speaker. The input-output apparatus may be integrally configured by a touch screen display, for example.

In a specific hardware configuration of the server apparatus 1, components can be omitted, replaced, and added, as appropriate, in accordance with the embodiment. For example, the control unit 11 may include a plurality of hardware processors. The hardware processor may be configured by a microprocessor, an FPGA, a GPU, and the like. The input-output apparatus 14 may be omitted or an input-output apparatus (for example, an optical drive) other than those exemplified may be added. The server apparatus 1 may be configured by a plurality of computers. In this case, the hardware configurations of the computers may or may not coincide with each other.

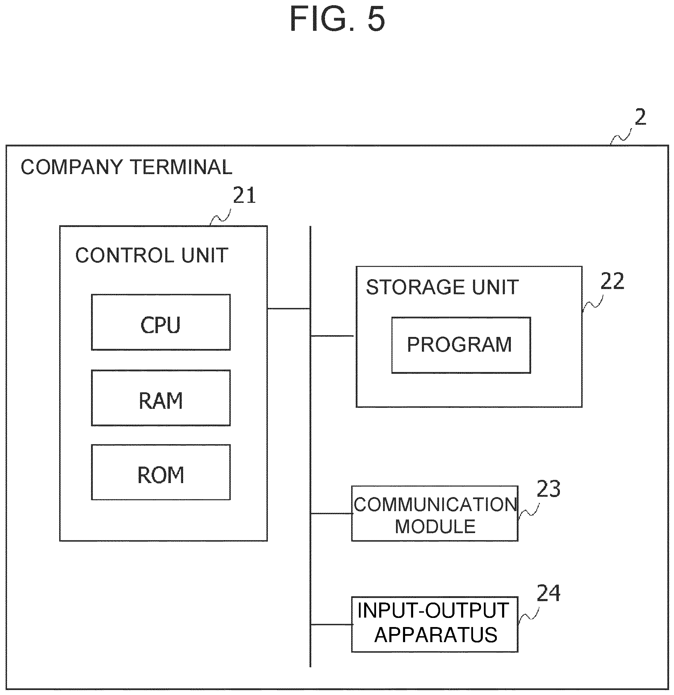

FIG. 5 is a diagram schematically showing one example of a hardware configuration of the company terminal 2 according to the first embodiment. The company terminal 2 is configured as a computer having a control unit 21, a storage unit 22, a communication module 23, and an input-output apparatus 24.

As with the server apparatus 1, the company terminal 2 can be configured as a computer having a processor such as a CPU and GPU, a main storage apparatus such as a RAM and a ROM, and an auxiliary storage apparatus such as an EPROM, a hard disk drive, and a removable media. However, some or all of the functions may be realized by a hardware circuit such as an ASIC and an FPGA.

The control unit 21 is an arithmetic unit that realizes various functions of the company terminal 2 by executing a predetermined program. The control unit 21 can be realized by a hardware processor such as a CPU, for example. The control unit 21 may include a RAM, a read only memory (ROM), a cache memory, and the like.

The storage unit 22 is a unit for storing information therein and is configured by a storage medium such as a RAM, a magnetic disk, and a flash memory. In the storage unit 22, a program executed by the control unit 21 and data and the like used by the programs are stored.

The communication module 23 is a communication interface for connecting the company terminal 2 to a network. The communication module 23 includes a network interface board and a wireless communication interface for wireless communication, for example. The company terminal 2 can perform data communication with another computer (for example, the server apparatus 1) via the communication module 23.

The input-output apparatus 24 is a unit for accepting an input operation performed by the operator and presenting information to the operator. Specifically, the input-output apparatus 24 includes apparatuses for performing input such as a mouse and a keyboard and apparatuses for performing output such as a display and a speaker. The input-output apparatus may be integrally configured by a touch screen display, for example.

As with the server apparatus 1, in a specific hardware configuration of the company terminal 2, components can be omitted, replaced, and added, as appropriate, in accordance with the embodiment.

Software Configuration

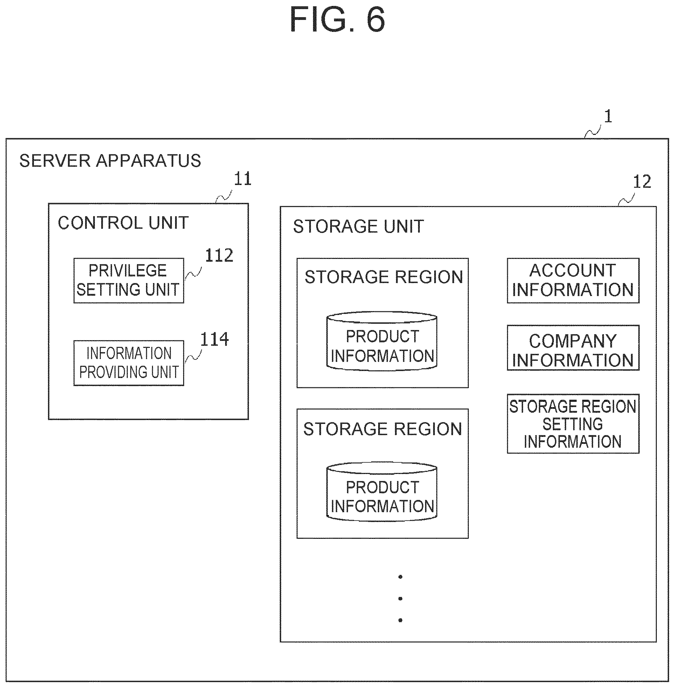

FIG. 6 is a diagram schematically showing a software configuration of the server apparatus 1. The control unit 11 is configured by having function modules of a privilege setting unit 112 and an information providing unit 114. Each function module may be realized as a result of executing programs stored in the storage unit 12 by the control unit 11 (CPU).

The privilege setting unit 112 receives a request for setting the permission of disclosure of product information from the company terminal 2. With the request for setting the permission of disclosure, identification information of the disclosure source company, identification information of the disclosure destination company, identification information of the product information to be disclosed, and identification information of items to be disclosed are also received from the company terminal 2.

In the first embodiment, the privilege setting unit 112 receives a request for setting the permission of disclosure of product information from the company terminal 2 and performs warning processing in response to the request. The warning processing is processing of outputting a warning for confirmation regarding the disclosure of product information to a company corresponding to the disclosure destination. The privilege setting unit 112 specifies an output aspect of the warning for the company that is the disclosure destination on the basis of information relating to the social credibility and information relating to the credibility of the company that is the disclosure destination seen from the company that is the disclosure source. The information relating to the social credibility is acquired from the company information stored in the storage unit 12, for example. The information relating to the credibility of the company that is the disclosure destination seen from the company that is the disclosure source is acquired from product information of products of the company that is the disclosure source and the company that is the disclosure destination and product tree information, for example.

The privilege setting unit 112 instructs the company terminal 2 to output a warning in a specified output aspect. Then, when a request for setting the permission of disclosure is received from the company terminal 2 again, the privilege setting unit 112 executes processing of setting the privilege of access to the corresponding product information stored in the storage unit 12. Details of the processing of the privilege setting unit 112 are described later.

The information providing unit 114 executes processing of generating a product tree on the basis of the linking of each product information and processing of providing information relating to the generated product tree to the company terminal 2 on the basis of a request from the company terminal 2.

In the first embodiment, the storage unit 12 includes a plurality of logical storage regions. A different privilege of access is set for each of the storage regions. For example, there are a region of which privilege of access is given to a company A, a region of which privilege of access is given to a company B, and a region of which privilege of access is given to both of the company A and the company B. In the first embodiment, the privilege setting unit 112 sets, on the basis of a request for setting the permission of disclosure received from the company terminal 2, the permission of disclosure of corresponding product information to a specified company by copying the product information to a suitable storage region. Specific processing methods are described later.

In the storage unit 12, the account information, the company information, and the setting information of the storage region are stored. The account information is information relating to an account corresponding to each company participating in the information sharing system 100. Specifically, identification information of a company, a company name, an account of the company, and a password, for example, are included in the account information. In the first embodiment, the interaction between the server apparatus 1 and the company terminal 2 is performed when the operator of each company logs into the server apparatus 1 with use of the account of the corresponding company via the company terminal 2. An account may be allocated to each employee of each company. In this case, identification information of a company, a company name, an account of the company, and an account and a password of an employee, for example, are included in the account information. One method for participating in the information sharing system 100 is invitation from another company. The account information may also include identification information of a company invited to the information sharing system 100 by a target company and identification information of a company that has invited the target company to the information sharing system 100.

The company information is information relating to the company participating in the information sharing system 100. The company information includes a company name, identification information of the company, and information described in a certificate of registered matters, for example. The information described in the certificate of registered matters includes information such as an address of the headquarters and a name and an address of a representative director, for example. The information included in the company information described above is one example, and the information included in the company information can be changed, as appropriate, in accordance with the embodiment. For example, information such as the address of the headquarters may be acquired from information disclosed on the Internet.

The setting information of the storage region includes identification information of the company having the privilege of access, a list of product information that is stored, the size, and the address in the storage unit 12, for example, for each storage region.

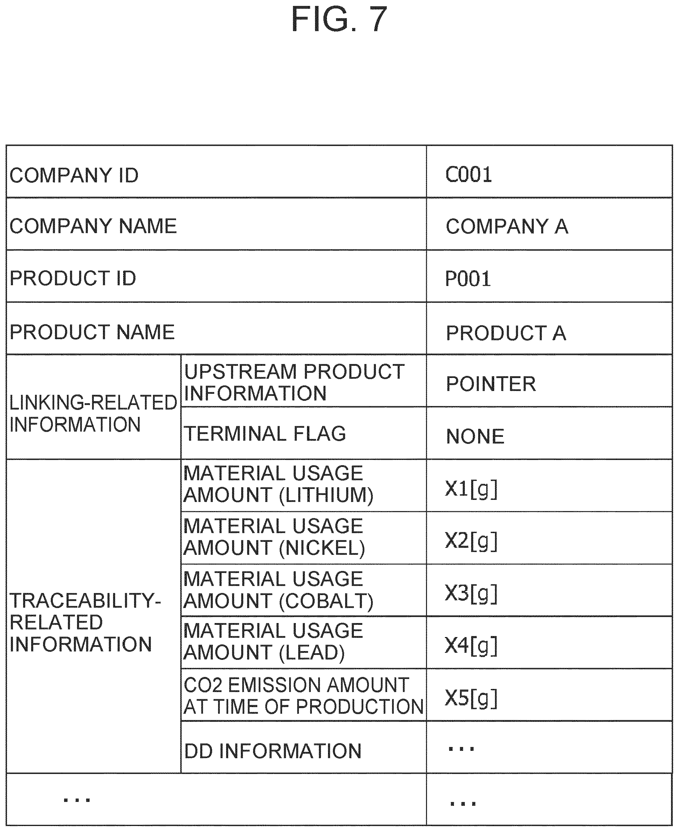

FIG. 7 is one example of product information. The product information may be received from the company terminal 2 or may be input via an operator of the server apparatus 1. In the example shown in FIG. 7, the product information has each of fields of a company ID, a company name, a product ID, and a product name. In the field of the company ID, an identifier of a company that produces a target product is stored. In the field of the company name, a name of the company that produces the target product is stored. In the field of the product ID, an identifier of the target product is stored. In the field of the product name, a name of the target product is stored.

The product information includes linking-related information. The linking-related information is information for identifying an upstream product linked to the target product. In the first embodiment, the linking-related information includes each of fields of "upstream product information" and "terminal flag".

The upstream product information field is a field in which information for identifying product information corresponding to the upstream product linked to the target product (in other words, a product necessary for producing the target product and is included in the target product) is stored. In other words, the field of the upstream product information functions as a pointer that indicates the upstream product linked to the target product.

The field of the terminal flag is a field in which a flag indicating whether the target product is a leaf node, in other words, a node positioned in an uppermost stream end in the product tree is stored. For example, when the value of the field of the terminal flag is "1 ", it is indicated that the target product is a node positioned in the terminal of the product tree. For example, when the value of the field of the terminal flag is "0", it is indicated that the target product is a node positioned in the terminal of the product tree.

When a value is stored in the field of the upstream product information, the field of the terminal flag is "0". Meanwhile, when the field of the terminal flag is "1", the field of the upstream product information is empty. The upstream product information and the value of the field of the terminal flag are received from the company terminal 2 or are input by the operator of the server apparatus 1, for example. When the target product is manufactured with use of a plurality of upstream products, the product information of the target product includes linking-related information for each upstream product.

The information providing unit 114 generates a product tree for the end product by tracing the linking-related information by determining an upstream product from the linking-related information included in the product information of the end product and then determining the next upstream product by referring to linking-related information included in product information of that upstream product, for example. At this time, when the terminal flag is "1", the information providing unit 114 determines that the product tree ends at that product.

The product information further includes traceability-related information. The traceability-related information includes the usage amount of a predetermined material, the recycle amount of the material, the recycle rate of the material, the emission amount of greenhouse gas emitted when the product is produced, or due diligence (DD)-related information, for example. Those values are values corresponding to a process of producing the target product. For example, in traceability-related information included in product information of the product A1 in the example shown in FIG. 2, the amount of greenhouse gas emitted in the production activity of the product A1 and the like are stored. In the traceability-related information included in the product information A1, information on a process until the upstream product is produced (for example, the amount of greenhouse gas emitted until the upstream product A11 is produced and the like) is not included.

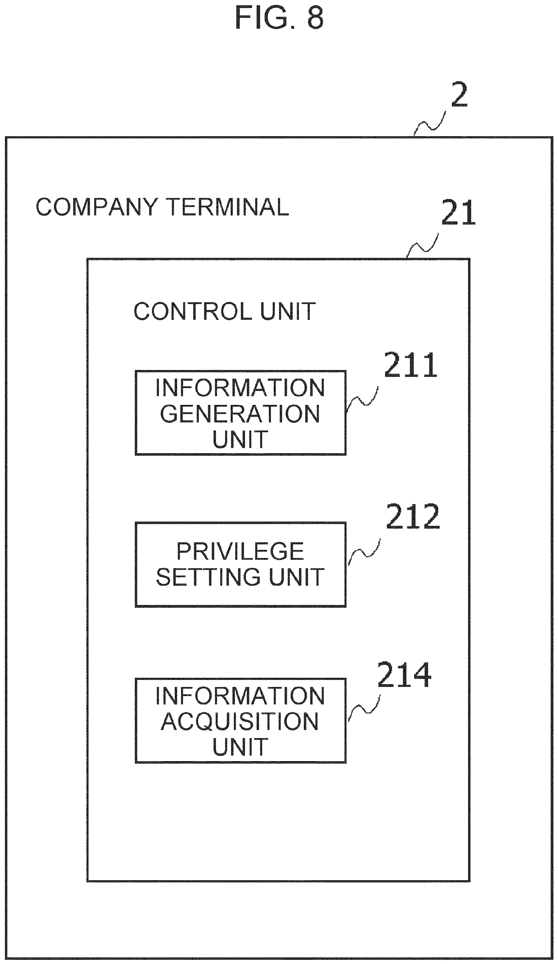

FIG. 8 is a diagram schematically showing a software configuration of the company terminal 2. The control unit 21 has function modules of a privilege setting unit 212 and an information acquisition unit 214. Each function module may be realized as a result of executing programs stored in the storage unit 22 by the control unit 21 (CPU).

The information generation unit 211 generates information (product information) relating to the product of the company corresponding to the company terminal 2 and transmits the information to the server apparatus 1. The privilege setting unit 212 accepts an input of a user operation for setting a permission of disclosure through a disclosure permission setting screen described later, for example. Identification information of the company that is the disclosure destination, identification information of the disclosure target product, and information indicating the items to be disclosed are also accepted with the user operation for setting the permission of disclosure.

The privilege setting unit 212 generates permission information when the privilege setting unit 212 accepts the user operation for setting the permission of disclosure. The permission information includes the identification information of the company corresponding to the company terminal 2, and the identification information of the company that is the disclosure destination, the identification information of the disclosure target product, and the information indicating the items to be disclosed accepted with the user operation for setting the permission of disclosure. The identification information of the company included in the permission information may be a company name or an identifier of the company. The identification information of the disclosure target product may be a product number, for example. The information indicating the items to be disclosed may be item names or identifiers of the items, for example. The privilege setting unit 212 transmits a request for setting the permission of disclosure and permission information to the server apparatus 1.

The information acquisition unit 214 requests the server apparatus 1 to provide a product tree and outputs information transmitted from the server apparatus 1.

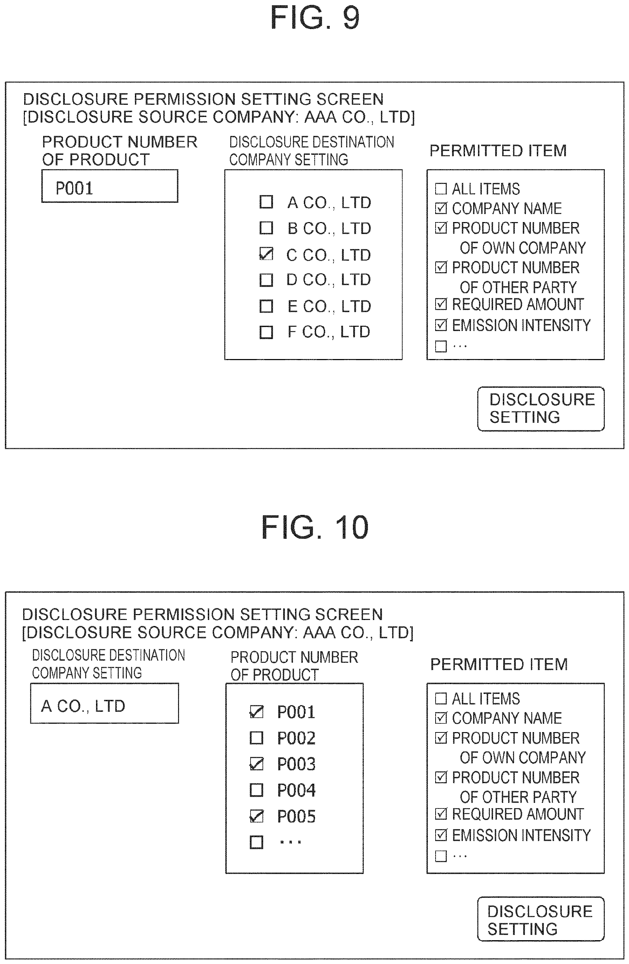

Each of FIG. 9 and FIG. 10 is one example of the disclosure permission setting screen of the company terminal 2. The disclosure permission setting screen is displayed on a screen of the company terminal 2 by the privilege setting unit 212 when an operator of the company terminal 2 selects a menu for setting a permission of disclosure from a menu screen for the company terminal 2 of the information sharing system 100, for example. The disclosure permission setting screen shown in FIG. 9 is an example in which a disclosure target product is selected from a list of products of the company corresponding to the company terminal 2 first and a disclosure destination company is selected out of a list of candidates for the company that is the disclosure destination next. The disclosure permission setting screen shown in FIG. 10 is an example in which a disclosure destination company is selected out of a list of candidates for the company that is the disclosure destination first and a disclosure target product is selected from a list of products of the company corresponding to the company terminal 2 next.

In the example shown in FIG. 9 and FIG. 10, the list of companies and the list of products that are displayed are received from the server apparatus 1 in accordance with the interaction between the server apparatus 1 and the company terminal 2. For example, on the disclosure permission setting screen shown in FIG. 9, the list of products for selecting the disclosure target product is the list of products of the company corresponding to the company terminal 2. For example, on the disclosure permission setting screen shown in FIG. 9, the list of companies displayed after the disclosure target product is selected can be a list of companies having a past record of trading with the company corresponding to the company terminal 2 regarding the disclosure target product in the past.

For example, on the disclosure permission setting screen shown in FIG. 10, the list of companies for selecting the disclosure destination company can be a list of companies having a past record of trading regarding any of the products with the company corresponding to the company terminal 2 in the past. On the disclosure permission setting screen shown in FIG. 10, the list of products of the company corresponding to the company terminal 2 displayed after the company that is the disclosure destination is selected can be a list of products having a past record of trading with the company selected as the company that is the disclosure destination and the company corresponding to the company terminal 2 in the past.

Therefore, the server apparatus 1 may store therein data (trading data) relating to past trading for each company and generate a list of companies and a list of products on the basis of the trading data. The trading data may include an identifier of a target product, an identifier of a company that has produced the product, and a trading date, for example.

When a disclosure target product and a company that is the disclosure destination are selected on the disclosure permission setting screens shown in FIG. 9 and FIG. 10, a section for selecting items of which disclosure is to be permitted out of the product information of the disclosure target product is displayed. In the section for selecting items permitted to be disclosed, items of which boxes have been checked are selected as the items permitted to be disclosed. The items permitted to be disclosed also include an option of "all items" with which all of the items can be selected in a batch.

On the disclosure permission setting screens shown in FIG. 9 and FIG. 10, a "disclosure setting" button is included. When a "disclosure setting" button is selected by the operator of the company terminal 2, a user operation for setting a permission of disclosure is input. The privilege setting unit 212 generates permission information and transmits a request for setting the permission of disclosure and the permission information to the server apparatus 1. The disclosure permission setting screens shown in FIG. 9 and FIG. 10 are one example, and the configuration of the disclosure permission setting screen can be freely set in accordance with the embodiment.

Flow of Processing

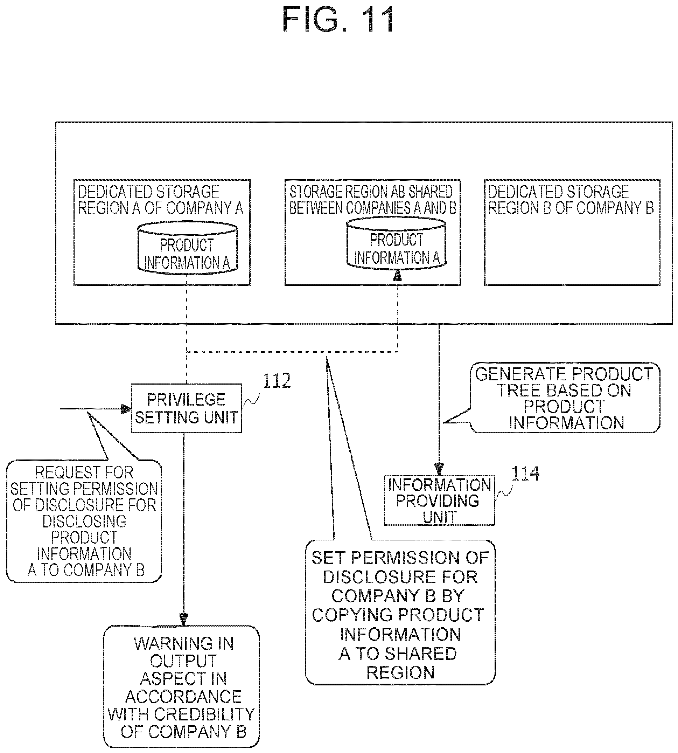

FIG. 11 is a diagram showing a flow of processing related to the setting of the permission of disclosure of the product information in the information sharing system 100. In the example shown in FIG. 11, the company A is a downstream company. The company B is an upstream company. A product produced by the company A is a product A. A product produced by the company B is a product B. Product information corresponding to the product A is product information A. Product information corresponding to the product B is product information B. In the example shown in FIG. 11, a case in which the company A sets a permission of disclosure for disclosing the product information A to the company B is supposed.

The product information A is retained in a storage region (hereinafter referred to as a storage region A) for which the privilege of access is only given to the company A. The storage region for which the privilege of access is only given to a predetermined company is hereinafter referred to as a dedicated storage region. The setting information of a dedicated storage region of a predetermined company includes identification information of one company to which the storage region is allocated as identification information of a company having the privilege of access. The server apparatus 1 has the privilege of access to the dedicated storage regions of both of the companies. At this time point, an account of the company B does not have the privilege of access to the dedicated storage region A of the company A. Therefore, the product information A is not disclosed to the company B.

Next, the privilege setting unit 112 of the server apparatus 1 receives a request for setting the permission of disclosure from the company terminal 2 of the company A. The request is for setting a permission of disclosure of the product information A to the company B. Permission information including identification information of the company A as the company that is the disclosure source, identification information of the company B as the company that is the disclosure destination, the product A as the disclosure target product, and information indicating the items permitted to be disclosed out of the product information A is also received with the request for setting the permission of disclosure.

In the first embodiment, the privilege setting unit 112 transmits a warning to the company terminal 2 of the company A in an output aspect in accordance with the credibility of the company B in order to ask the company A to confirm whether the request for setting the permission of disclosure is correct. The output aspect of the warning is specified on the basis of the information relating to the company B. When a confirmatory response is received from the company terminal 2 of the company A in response to the warning, the privilege setting unit 112 performs processing of setting a permission of disclosure of the product information A to the company B.

In the first embodiment, the privilege setting unit 112 copies the product information A stored in the storage region A to a storage region for which the privilege of access is given to both of the company A and the company B. As a result, the product information A is placed in a state of being accessible from both of the company A and the company B and is disclosed to the company B. The storage region for which the privilege of access is given to both of the company A and the company B is hereinafter referred to as a storage region AB shared between the company A and the company B. The server apparatus 1 has the privilege of access to the storage region AB shared between the company A and the company B. The setting information of the storage region shared between the two companies includes identification information of the two companies to which the storage region is allocated as identification information of companies having the privilege of access.

In other words, in the first embodiment, it can be said that the product information A by the company A and the permission of disclosure with respect to the company B are set as a result of storing a copy of the product information A in the storage region AB shared between the company A and the company B. Items other than the items permitted to be disclosed out of the product information A included in the permission information are excluded from the target of copying from the dedicated storage region A of the company A to the storage region AB shared between the company A and the company B.

The information providing unit 114 in the server apparatus 1 generates information relating to the product tree on the basis of the stored product information and outputs the information relating to the product tree. The information providing unit 114 can generate an image expressing the tree diagram on the basis of the product information. When the information providing unit 114 generates the information relating to the product tree, the information providing unit 114 can integrate traceability-related information defined in each product information and output the result.

The information providing unit 114 may generate a product tree in accordance with a request from the company terminal 2 and provide the product tree to the company terminal 2. It is inappropriate to disclose the entire product tree to a predetermined company. Thus, as shown in FIG. 3, when the information providing unit 114 provides a product tree to the company terminal 2 corresponding to a certain company, the information providing unit 114 may perform processing of causing a range for which the permission of disclosure to the company is not set to be undisclosed. Whether there is a setting of the permission of disclosure is determined in accordance with whether a storage region shared between the company that manufactures the target product and the company corresponding to the company terminal 2 that requests the product tree stores therein product information of the product.

Example of Output Aspect of Warning

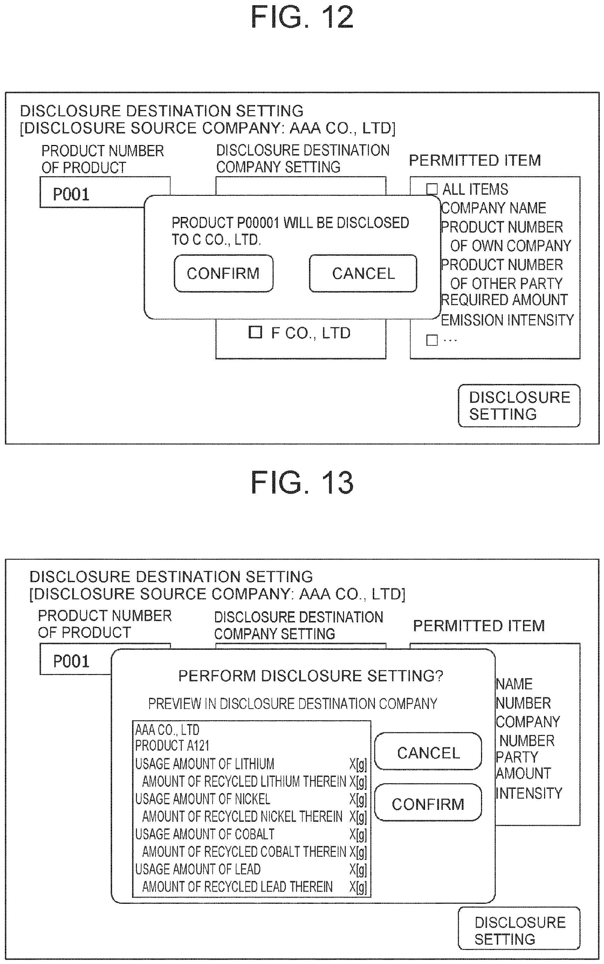

Each of FIG. 12, FIG. 13, and FIG. 14 is one example of an output aspect of a warning output on the screen of the company terminal 2 in response to a request for setting the permission of disclosure. In FIG. 12 to FIG. 14, a warning in response to the request for setting the permission of disclosure is output as a popup window, for example.

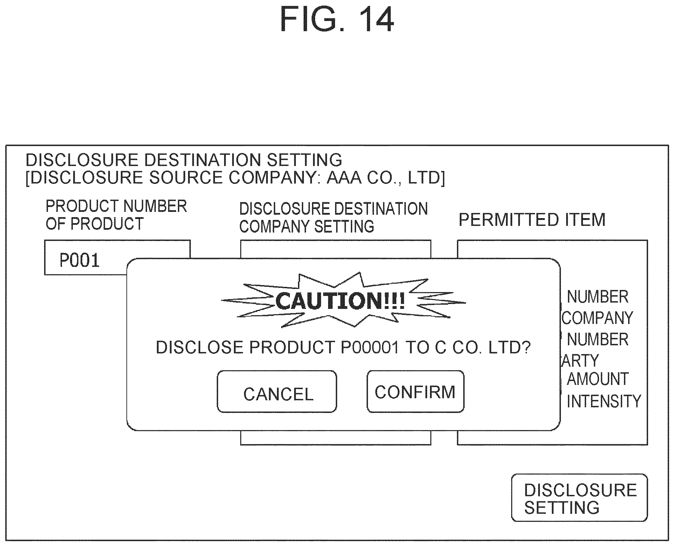

In FIG. 12, a message of "Product P00001 will be disclosed to C Co., Ltd" is displayed as a warning. In FIG. 13, a preview image of a display screen of disclosure target product information is displayed with a message of "Perform disclosure setting?" in the disclosure destination company. In FIG. 14, an image including a message of "CAUTION!!!" and a message of "Disclose product P00001 to C Co., Ltd?" are displayed by being emphasized by boldface.

The degree of warning of each example of the output aspect of the warning shown in FIG. 12, FIG. 13, and FIG. 14 becomes stronger in the stated order. The message of the example shown in FIG. 12 simply gives a notification indicating that the disclosure of the information is to be set and does not include direct wording indicating the warning. In the example shown in FIG. 13, the message is a question and the preview of the display screen of the target product information in the disclosure destination company is also displayed, and the attention of the operator of the company terminal 2 is held more than the example shown in FIG. 12. In the example shown in FIG. 14, a message including direct wording indicating a warning is displayed in an explosion shape, and the attention of the operator of the company terminal 2 is held more than the examples shown in FIG. 12 and FIG. 13.

The privilege setting unit 112 of the server apparatus 1 specifies an output aspect of a warning output to the company terminal 2 of the disclosure source company out of different output aspects as those shown in FIG. 12 to FIG. 14 on the basis of information relating the disclosure destination company. More specifically, the privilege setting unit 112 specifies the output aspect of the warning such that the degree of warning of the output aspect becomes weaker as the credibility of the disclosure destination company becomes higher and the degree of warning of the output aspect becomes stronger as the credibility of the disclosure destination company becomes lower on the basis of the information relating to the disclosure destination company.

The output aspect of the warning in response to the request for setting the permission of disclosure is not limited to the examples shown in FIG. 12 to FIG. 14. For example, as a message indicating a warning, a voice may be output instead of a character string. For example, a message indicating a warning may be output by a character string and a voice. For example, an image indicating a warning may be output instead of a message of a character string indicating a warning. For example, a character string, a voice, and an image indicating a warning may be output. For example, transition may be made to a screen displaying a warning instead of a popup window. For example, a popup window including a message indicating a warning may be displayed a predetermined number of times or may be repeatedly displayed a predetermined number of times. The output aspect of the warning in response to the request for setting the permission of disclosure is not limited to the above and can be freely set by an administrator of the information sharing system 100. As one output aspect of a warning, a case in which a warning is not output may be included.

As shown in FIG. 12 to FIG. 14, a "cancel" button and a "confirm" button are displayed with the warning. When the "confirm" button is selected by the operator of the company terminal 2, a confirmatory response is transmitted to the server apparatus 1 from the privilege setting unit 212 of the company terminal 2. The permission of disclosure to the company that is the disclosure destination regarding the target product information is set. When the "cancel" button is selected by the operator of the company terminal 2, a cancellation response is transmitted to the server apparatus 1 from the privilege setting unit 212 of the company terminal 2. The permission of disclosure to the company that is the disclosure destination regarding the target product information is interrupted.

Processing Flow

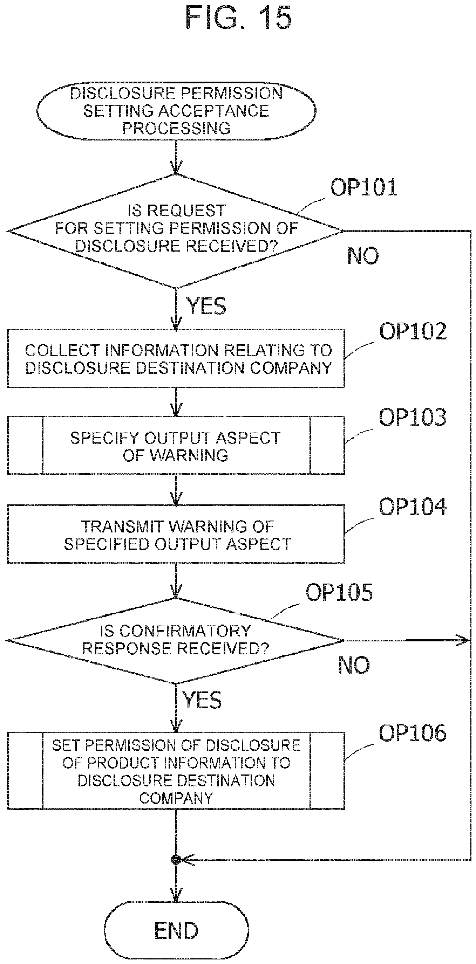

FIG. 15 is one example of a flowchart of request acceptance processing of the server apparatus 1. The request acceptance processing is processing performed when a request for setting the permission of disclosure is received from the company terminal 2. The processing shown in FIG. 15 is repeatedly executed with a predetermined cycle. An executor of the processing shown in FIG. 15 is the control unit 11, but description is made by considering the privilege setting unit 112 that is the function component to be the executor for convenience.

In OP 101, the privilege setting unit 112 determines whether a request for setting the permission of disclosure is received from the company terminal 2. When a request for setting the permission of disclosure is received from the company terminal 2 (OP 101: YES), processing proceeds to OP 102. When a request for setting the permission of disclosure is not received from the company terminal 2 (OP 101: NO), the processing shown in FIG. 15 ends. Permission information is also received with the request for setting the permission of disclosure. The permission information includes identification information of the disclosure source company, identification information of the disclosure destination company, identification information of the target product for which the product information is to be disclosed, and information indicating the item for which the permission of disclosure is to be set out of the product information, for example.

In OP 102, the privilege setting unit 112 collects information relating to the disclosure destination company. For example, the privilege setting unit 112 acquires information on the disclosure destination company from the company information stored in the storage unit 12. Information such as the address of the headquarters of the disclosure destination company and the like can be acquired from the company information stored in the storage unit 12. For example, the privilege setting unit 112 acquires information on the disclosure destination company from the account information stored in the storage unit 12. The company that has invited the disclosure destination company to the information sharing system 100 and the company invited to the information sharing system 100 by the disclosure destination company, for example, can be determined from the account information of the disclosure destination company. However, the method for participating in the information sharing system 100 is not only invitation from another company. Therefore, information on the company that has performed invitation or that is invited may not be included in the account information of the disclosure destination company. For example, the privilege setting unit 112 acquires setting information of the storage region for which the privilege of access is given to the disclosure destination company from the setting information of the storage region stored in the storage unit 12. It can be determined whether there is a storage region shared between the disclosure source company and the disclosure destination company from the setting information of the storage region for which the privilege of access is given to the disclosure destination company.

For example, the privilege setting unit 112 acquires product information of the disclosure source company, product information of the disclosure destination company, and product information of another company from the dedicated storage region of each of the companies. Product trees for a plurality of end products are acquired from the product information of each company. The product tree indicates that any of the products is traded between the disclosure destination company and the disclosure source company when one of the disclosure destination company and the disclosure source company is the upstream company and the other is connected as the downstream company. When a product of the disclosure destination company and a product of the disclosure source company are included in a product tree of one certain end product, it is indicated that there is a possibility that the disclosure destination company and the disclosure source company may be competitors that manufacture the same types of parts. The collected information relating to the disclosure destination company is not limited to the information described above.

In OP 103, the privilege setting unit 112 specifies an output aspect of a warning in response to a request for setting the permission of disclosure. In OP 103, the output aspect of the warning is specified on the basis of the information relating to the disclosure destination company collected in OP 102. Details of the processing of OP 103 are described later.

In OP 104, the privilege setting unit 112 transmits the warning in the output aspect specified in OP 103 to the company terminal 2. In OP 105, the privilege setting unit 112 determines whether a confirmatory response is received from the company terminal 2. When a confirmatory response is received from the company terminal 2 (OP 105: YES), the processing proceeds to OP 106. When a confirmatory response is not received from the company terminal 2 (OP 105: NO), in other words, when a cancellation response is received, the processing shown in FIG. 15 ends.

In OP 106, the privilege setting unit 112 performs processing of setting a permission of disclosure of the target product information to the disclosure destination company. In the first embodiment, as described above, in OP 106, the privilege setting unit 112 sets a permission to disclosure of the target product information to the disclosure destination company by copying the target product information from the dedicated storage region of the disclosure source company to the storage region shared between the disclosure destination company and the disclosure source company. When there are no storage regions shared between the disclosure destination company and the disclosure source company, the privilege setting unit 112 generates a storage region shared between the disclosure destination company and the disclosure source company and then stores the copy of the target product information in the storage region shared between the disclosure destination company and the disclosure source company. Then, the processing shown in FIG. 15 ends.

Processing of Specifying Output Aspect of Warning

The privilege setting unit 112 specifies an output aspect of a warning on the basis of the information relating to the disclosure destination company. Examples of a method of specifying the output aspect of the warning includes the following three. The administrator of the information sharing system 100 may freely select which method to employ.

(1) A method using scores indicating the highness of credibility of the disclosure destination company.
(2) A method using levels indicating the highness of credibility of the disclosure destination company.
(3) A method using a model.

The information used in the specification of the output aspect of the warning is the same for all of the methods (1) to (3). The information used in the specification of the output aspect of the warning is broadly divided into information relating to the social credibility of the disclosure destination company and information relating to the credibility of the disclosure destination company seen from the disclosure source company.

The information relating to the social credibility of the disclosure destination company includes attribute information of the disclosure destination company, for example. The attribute information of the disclosure destination company includes a country in which the headquarters of the disclosure destination company is located, a country in which an address of a representative director is placed, the number of employees, the capital fund, and the number of years since establishment, for example. However, the attribute information of the disclosure destination company is not limited to the above. In the first embodiment, the attribute information of the disclosure destination company is retained as company information in the storage unit 12 of the server apparatus 1 and the company information is used.

The information relating to the credibility of the disclosure destination company seen from the disclosure source company includes information indicating the relationship between the disclosure source company and the disclosure destination company in the information sharing system 100 and information indicating the trading relationship between the disclosure source company and the disclosure destination company, for example.

The information indicating the relationship between the disclosure source company and the disclosure destination company in the information sharing system 100 is information indicating a history of the exchange of data between the disclosure source company and the disclosure destination company in the information sharing system 100. More specifically, the information indicating the relationship between the disclosure source company and the disclosure destination company in the information sharing system 100 includes information indicating whether there is a storage region shared between the disclosure source company and the disclosure destination company and information indicating whether either one of the disclosure source company or the disclosure destination company has invited the other to the information sharing system 100, for example. The information indicating whether there is a storage region shared between the disclosure source company and the disclosure destination company is acquired from setting information of the storage region retained in the storage unit 12, for example. The information indicating whether either one of the disclosure source company or the disclosure destination company has invited the other to the information sharing system 100 is acquired from account information retained in the storage unit 12. The information indicating the relationship between the disclosure source company and the disclosure destination company in the information sharing system 100 is not limited to the information described above.

The information indicating the trading relationship between the disclosure source company and the disclosure destination company includes information indicating whether there is a past record of direct trading of any of the products between the disclosure source company and the disclosure destination company and information indicating whether the disclosure source company and the disclosure destination company are competitors for the same type of products, for example. Those pieces of information are acquired from the product tree of each end product generated on the basis of the product information of the disclosure destination company, the product information of the disclosure source company, and the product information of each company.

Whether there is a past record of direct trading of any of the products between the disclosure source company and the disclosure destination company can be determined in accordance with whether the product of the disclosure destination company and the product of the disclosure source company are linked to each other in either the product information of the disclosure destination company or the product information of the disclosure source company, for example. Alternatively, whether there is a past record of direct trading of any of the products between the disclosure source company and the disclosure destination company can be determined in accordance with whether the disclosure destination company and the disclosure source company are connected to each other as the upstream company and the downstream company in adjacent Tiers in any of the product trees.

Whether the disclosure source company and the disclosure destination company are competitors for the same type of products can be determined in accordance with whether the disclosure source company and the disclosure destination company are in the same Tier level in the product tree of the same end product and whether the disclosure source company and the disclosure destination company are suppliers of the same type of parts in the product tree of the same end product. The information indicating the trading relationship between the disclosure source company and the disclosure destination company is not limited to the information described above.

The weighting differs depending on the type of information used in the specification of the output aspect of the warning. The order of the weight of the weighting is (A) the information relating to the social credibility of the disclosure destination company > (B) the information indicating the relationship between the disclosure source company and the disclosure destination company in the information sharing system 100 > (C) the information indicating the trading relationship between the disclosure source company and the disclosure destination company.

The methods of specifying the output aspect of the warning of (1) to (3) described above are described later by supposing that information of (A1) the country to which the headquarters of the disclosure destination company belong, (B1) whether there is a storage region shared between the disclosure source company and the disclosure destination company, (B2) whether there is an invitation to the information sharing system 100 between the disclosure source company and the disclosure destination company, (C1) whether there is a product directly traded between the disclosure source company and the disclosure destination company, (C2) whether the disclosure source company and the disclosure destination company are suppliers for the same type of parts of the same end product, and (C3) whether the disclosure source company and the disclosure destination company are the same Tier levels in the product tree of the same end product is used in the specification of the output aspect of the warning. The order of the weight of the weighting is

$$(A1) > (B1) > (B2) > (C1) > (C2) > (C3).$$

In the description of the methods of specifying the output aspect of the warning of (1) to (3) below, a case in which the output aspect of the warning is selected from five output aspects, that is, output aspects #1 to #5 is supposed. The strength of the warning is the order of the output aspect #1<the output aspect #2<the output aspect #3<the output aspect #4<the output aspect #5. Each of the output aspects #1 to #5 is supposed as below, for example.

In the output aspect #1, a message of a character string that does not include wording indicating a warning as in an example of an output aspect of the warning shown in FIG. 12 is displayed. In the output aspect #2, in addition to a display of the message of the character string of the output aspect #1, a voice of the message is output. In the output aspect #3, a message of a question prompting for the confirmation of the disclosure destination company and the product information to be disclosed and a preview of a display screen of the product information to be displayed on the company terminal 2 of the disclosure destination company as in an example of an output aspect of the warning shown in FIG. 13 are displayed. In the output aspect #4, an image in which wording indicating a warning is displayed in an emphasized manner and a message of a question prompting for the confirmation of the disclosure destination company and the product information to be disclosed as in an example of an output aspect of the warning shown in FIG. 14 are displayed. In the output aspect #5, the image and the message in the output aspect #4 are displayed and a warning sound is also output in a manner of being repeated a predetermined number of times. The output aspect #1 to the output aspect #5 are examples of the output aspects of the warning, respectively, and are not limited to those output aspects of the warning.

(1) Method Using Scores Indicating Highness of Credibility of Disclosure Destination Company

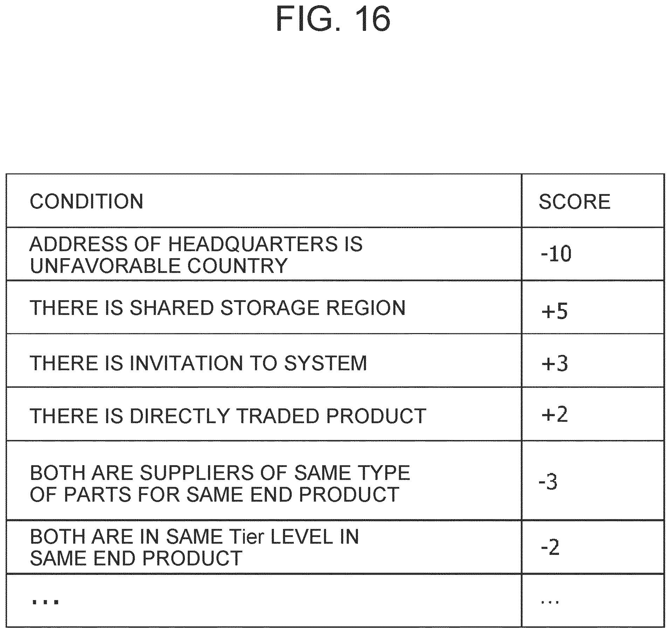

FIG. 16 is one example of a score table that defines scores showing the highness of credibility of the disclosure destination company. The score indicating the highness of credibility of the disclosure destination company is hereinafter referred to as a credibility score. The score table includes conditions and scores when those conditions are satisfied. The total of the scores obtained for each condition is the credibility score of the disclosure destination company. In the example shown in FIG. 16, it is indicated that the credibility becomes higher as the value becomes greater in the credibility score. However, the credibility score is not limited to the above and may be set so as to indicate that the credibility becomes higher as the value become smaller.

The score table shown in FIG. 16 includes conditions and scores for a case supposing that the information of (A1) to (C3) is used. A condition of "the address of the headquarters is an unfavorable country" is set as a condition corresponding to the information of (A1), and -10 points are acquired when the information of (A1) meets the condition. A condition of "there is a shared storage region" is set as a condition corresponding to the information of (B1), and +5 points are acquired when the information of (B1) meets the condition. A condition of "there is an invitation to the system" is set as a condition corresponding to the information of (B2), and +3 points are acquired when the information of (B2) meets the condition. A condition of "there is a directly traded product" is set as a condition corresponding to the information of (C1), and +2 points are acquired when the information of (C1) meets the condition. A condition of "both are suppliers of the same type of parts for the same end product" is set as a condition corresponding to the information of (C2), and -3 points are acquired when the information of (C2) meets the condition. A condition of "both are in the same Tier level in the same end product" is set as a condition corresponding to the information of (C3), and -2 points are acquired when the information of (C3) meets the condition. The score table is not limited to the example shown in FIG. 16.

In the example shown in FIG. 16, the conditions corresponding to (A1), (C2), and (C3) are conditions for determining that the credibility is to be decreased, and the scores obtained when the conditions are satisfied are negative values. Meanwhile, the conditions corresponding to (B1), (B2), and (C1) are conditions for determining that the credibility is to be improved, and the scores obtained when the conditions are satisfied are positive values. Weight is allocated to the information of (A1) to (C3) in the order of (A1) > (B1) > (B2) > (C1) > (C2) > (C3). Therefore, in the example shown in FIG. 16, the order of the magnitude of absolute values of the scores obtained when the conditions corresponding to the information of (A1) to (C3) are satisfied corresponds to the order of the weight.

For example, the privilege setting unit 112 collects the information of (A1) to (C3) as the information relating to the disclosure destination company and acquires the credibility score of the disclosure destination company by referring to the score table shown in FIG. 16. The privilege setting unit 112 specifies the output aspect of the warning from the output aspect #1 to the output aspect #5 in accordance with the credibility score of the disclosure destination company. For example, the credibility scores and the output aspect #1 to the output aspect #5 may be associated with each other in advance such that the degree of warning becomes weaker as the credibility score becomes higher and the output aspect associated to the credibility score of the disclosure destination company may be selected on the basis of the association. The range of values of the credibility score associated to each output aspect does not necessarily need to have the same width. For example, a credibility score of -10 points may be associated to the output aspect #5 while a range of credibility scores from +5 points to +10 points may be associated to the output aspect #1.

Scores may be acquired for a plurality of types. In this case, the output aspect of the warning may be specified on the basis of the relationship between the plurality of scores. For example, the score of the social credibility and the score of the credibility seen from the disclosure source company may be separately acquired and the output aspect of the warning may be specified out of the output aspect #1 to the output aspect #5 on the basis of the relationship between the two scores. For example, the output aspect of the warning is specified to be the output aspect #5 when (the score of the social credibility) > (the score of the credibility seen from the disclosure source company) is satisfied, the output aspect of the warning is specified to be the output aspect #3 when (the score of the social credibility) = (the score of the credibility seen from the disclosure source company) is satisfied, and the output aspect of the warning is specified to be the output aspect #2 when (the score of the social credibility) < (the score of the credibility seen from the disclosure source company) is satisfied. However, the correspondence between the relationship between the two credibility scores and the output aspects is one example and is not limited to the above. For example, the output aspect of the warning may be specified in consideration of not only the magnitude relationship between the score of the social credibility and the score of the credibility seen from the disclosure source company but also the difference between the two scores.

(2) Method Using Levels Indicating Highness of Credibility of Disclosure Destination Company

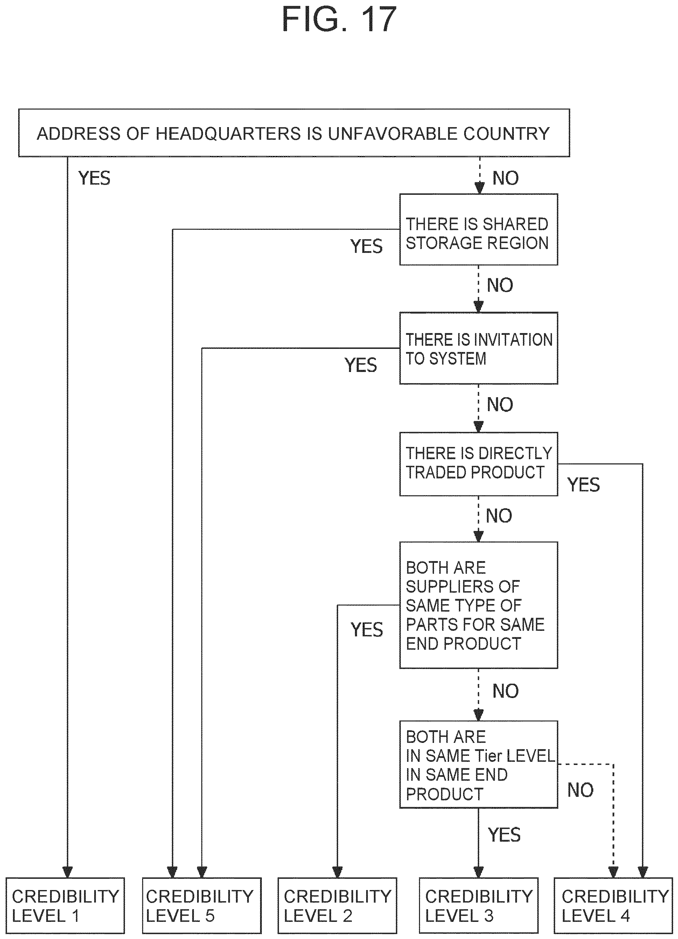

FIG. 17 is one example of a YES/NO chart for determining the highness of credibility of the disclosure destination company. For example, the privilege setting unit 112 determines the credibility level of the disclosure destination company with use of a chart as that shown in FIG. 17 on the basis of the information of (A1) to (C3) of the disclosure destination company.

In the example shown in FIG. 17, when the information of (A1) indicates that "the address of the headquarters is an unfavorable country", it is determined that the credibility level is a credibility level 1. When the information of (B1) indicates that "there is a shared storage region" and the information of (B2) indicates that "there is an invitation to the system", it is determined that the credibility level is a credibility level 5. When the information of (C1) indicates that "there is a directly traded product", it is determined that the credibility level is a credibility level 4. When the information of (C2) indicates that "both are suppliers of the same type of parts for the same end product", it is determined that the credibility level is a credibility level 2. When the information of (C3) indicates that "the disclosure source company and the disclosure destination company are in the same Tier level in the same end product", it is determined that the credibility level is a credibility level 3. When the information of (A1) to (C3) of the disclosure destination company is negative determination in every determination described above, it is determined that the credibility level is a credibility level 4.

Weight is allocated to the information of (A1) to (C3) in the order of (A1) > (B1) > (B2) > (C1) > (C2) > (C3). Therefore, in the example shown in FIG. 17, the determination order and the order of weight regarding the information of (A1) to (C3) correspond to each other. The determination of the credibility level is not limited to that in accordance with the chart as that shown in FIG. 17.

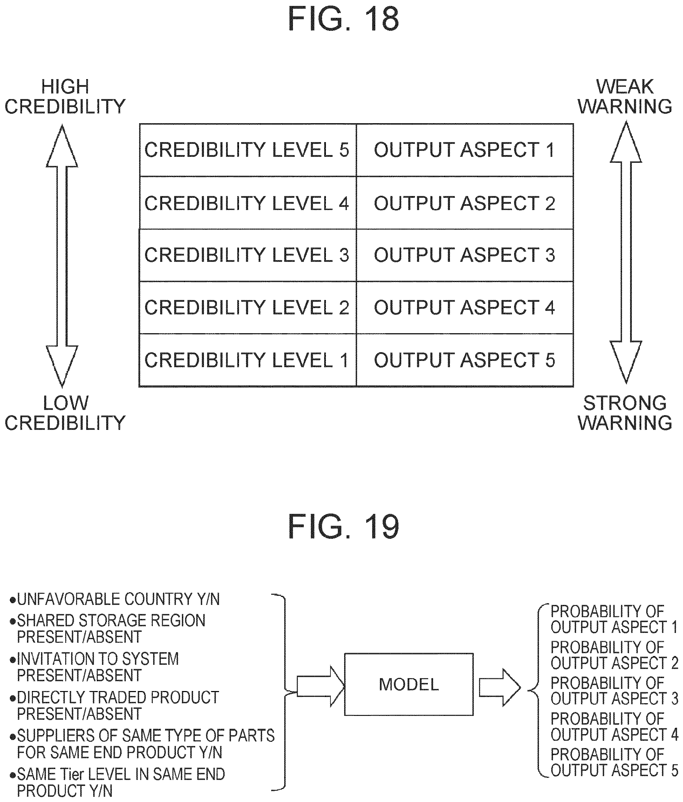

FIG. 18 is one example of a correspondence table between credibility levels and output aspects. The correspondence table is retained in the storage unit 12, for example. In the example shown in FIG. 18, the credibility levels and the output aspects are associated with each other such that the degree of warning becomes weaker as the credibility level becomes higher. The privilege setting unit 112 refers to the correspondence table shown in FIG. 18 and selects an output aspect in accordance with the credibility level of the disclosure destination company obtained by the chart shown in FIG. 17, for example, as the output aspect of the warning.

(3) Method Using Model

FIG. 19 is a diagram showing one example of inputs and outputs of a model determining output aspects of the warning. The model used in the determination of the output aspect of the warning is a machine learning model and a regression model generated by a statistical approach such as a regression analysis, for example. Examples of the machine learning model include models generated in accordance with algorithms such as a random forest, support vector regression, boosting regression, a neural network, and deep learning.

FIG. 19 shows an example of a case in which a machine learning model is employed as a model for determining the output aspect of the warning. The machine learning model has learned the relationship between the information of (A1) to (C3) and the output aspects of the warning by learning data in which information of (A1) to (C3) of a company for learning is the input and an output aspect of the warning that is any of the output aspect #1 to the output aspect #5 is the output. More specifically, the machine learning model has performed learning such that the output aspect has a stronger degree of warning as the highness of credibility of the company indicated by the information of (A1) to (C3) of the company becomes lower.

When the information of (A1) to (C3) of the disclosure destination company is input to the machine learning model, the probability of becoming the output aspect of the warning is output for each of the output aspect #1 to the output aspect #5, for example. The privilege setting unit 112 specifies the output aspect having the highest probability as the output aspect of the warning, for example.

When a regression model is employed as the model for determining the output aspect of the warning, the information of (A1) to (C3) of the company is an explanatory variable and the output aspect of the warning is an objective variable. In the regression model, a coefficient of each term of a regression model equation is adjusted (fitting) with use of a set of the information of (A1) to (C3) and the output aspects of the warning for a plurality of companies in a relationship in which the degree of warning of the output aspect of the warning becomes stronger as the highness of credibility of the company becomes lower. When the information of (A1) to (C3) of the company that is the disclosure destination is input to the explanatory variable of the regression model equation, an objective variable indicating any of the output aspect #1 to the output aspect #5 is obtained as the output aspect of the warning. The method of specifying the output aspect of the warning is not limited to the methods of (1) to (3) described above.

The methods of (1) to (3) described above may be combined with each other. For example, (1) the method using scores indicating the highness of credibility of the disclosure destination company and (2) the method using levels indicating the highness of credibility of the disclosure destination company may be combined with each other. In this case, the credibility level is defined as the credibility score, the credibility score of the disclosure destination company is acquired by the method of (1), the credibility level of the disclosure destination company is determined on the basis of the credibility score, and the output aspect of the warning is specified as an output aspect in accordance with the credibility level.

For example, (1) the method using scores indicating the highness of credibility of the disclosure destination company and (3) the method using a model may be combined with each other. In this case, for example, the score of the social credibility and the score of the credibility seen from the disclosure source company are acquired by the method of (1), those two scores are input to the model of (3), and the output aspect of the warning is specified on the basis of the output of the model. In this case, the model of (3) has learned the relationship between the output aspects of the warning and each of the score of the social credibility and the score of the credibility seen from the disclosure source company. The input to the model is not limited to two, that is, the score of the social credibility and the score of the credibility seen from the disclosure source company and may be three or more.

Effects of First Embodiment

In the first embodiment, when the account of the disclosure source company sets the permission of disclosure of the target product information to the disclosure destination company, a warning is output to the company terminal 2 of the disclosure source company in an output aspect specified on the basis of the information relating to the disclosure destination company. As a result, an opportunity for the operator of the disclosure source company to confirm whether the target product information may really be disclosed to the disclosure destination company can be provided. For example, human error such as a case in which the target product information is disclosed to an unintended disclosure destination company or a case in which unintended information is disclosed to the disclosure destination company can be reduced.

In the first embodiment, the output aspect of the warning is specified in accordance with the highness of credibility of the disclosure destination company. As a result, the highness (lowness) of credibility of the disclosure destination company can be reflected in the weakness (strength) of the warning. For example, in the case of a disclosure destination company with low credibility, a strong warning is output. As a result, the operator of the disclosure source company can carefully confirm the setting of the permission of disclosure of the product information.

Modified Example of First Embodiment

In the first embodiment, when a permission of disclosure of product information to the disclosure destination company is set, a shared storage region to which the disclosure source company and the disclosure destination company have a privilege of access is set as a method of transmitting and receiving the product information. Instead of the above, the method of transmitting and receiving the product information when a permission of disclosure of product information to the disclosure destination company is set may be performed by giving the disclosure destination company a privilege of access to a storage region allocated to the disclosure source company, for example. In this case, as (B) the information indicating the relationship between the disclosure source company and the disclosure destination company in the information sharing system 100 used in the specification of the output aspect of the warning, (B1-1) whether a privilege of access to the storage region allocated to the disclosure source company is given to the disclosure destination company may be used instead of (B1) whether there is a storage region shared between the disclosure source company and the disclosure destination company. The privilege of access of the storage region allocated to the disclosure source company to the disclosure destination company may be a write permission.

Other Modified Examples

The embodiment described above is merely one example, and the present disclosure may be embodied by being changed, as appropriate, without departing from the gist of the present disclosure. For example, processing and means described in the present disclosure can be embodied by being freely combined with each other as long as there is no contradiction.

In the description of the embodiment, the server apparatus 1 stores product information in the database, but the product information may be stored by means other than the database.

In the description of the embodiment, a form in which the server apparatus 1 completes the product tree has been exemplified, but the roles of the server apparatus 1 may be disposed in the plurality of company terminals 2 in a distributed manner. For example, the product information may be stored in a distributed database using a blockchain infrastructure. In this case, a product information database may be configured by the plurality of company terminals 2. In this case, the processing described in the first embodiment may be executed with use of a smart contract. For example, the processing of setting the permission of disclosure may be executed with a trigger of an account of a certain company writing permission information into the database.

In the description of the embodiment, the plurality of companies included in the supply chain is companies that produce products, but the companies included in the supply chain do not necessarily need to be companies that produce products. For example, companies that perform transportation, importation, storage, wholesale, and the like of products are also included in the companies configuring the supply chain.

Processing described to be performed by one apparatus may be executed by being shared between a plurality of apparatuses. Alternatively, processing described to be performed by different apparatuses may be executed by one apparatus. In a computer system, the type of the hardware configuration (server configuration) that realizes each function can be flexibly changed.

It is also possible to realize the present disclosure by supplying a computer program in which the functions described in the embodiment are implemented to a computer and causing one or more processors of the computer to read out and execute the program. Such a computer program may be provided to the computer by a non-transitory computer-readable storage medium connectable to a system bus of the computer or may be provided to the computer via a network. Examples of the non-transitory computer-readable storage medium include any type of disks or discs such as a magnetic disk (a floppy (R) disk, a hard disk drive (HDD), and the like) and an optical disc (a CD-ROM, a DVD disc, a Blu-ray disc, and the like), a read only memory (ROM), a random-access memory (RAM), an EPROM, an EEPROM, a magnetic card, a flash memory, an optical card, and any type of media suitable for storing therein an electronic instruction, for example.

**Claims**

1. An information processing apparatus (1), comprising a processor (11) configured to:

   accept a request for setting a permission of disclosure of information relating to a first product of a first company to a second company from an account of the first company;
   acquire first information relating to the second company;
   specify a first output aspect of a warning for first processing of giving the warning in response to the request based on the first information; and
   execute the first processing in the first output aspect.

2. The information processing apparatus (1) according to claim 1, wherein:

   the processor (11) is configured to specify the first output aspect out of output aspects each having a different strength of warning for the first processing; and
   the output aspects for the first processing includes at least an output aspect of displaying a preview of a display screen including the information relating to the first product when access is performed from an account of the second company.

3. The information processing apparatus (1) according to claim 1 or 2, wherein the processor (11) is configured to:

   determine a highness of credibility of the second company based on the first information relating to the second company; and
   specify the first output aspect having a stronger strength of warning as the highness of credibility of the second company becomes lower.

4. The information processing apparatus (1) according to claim 3, wherein the processor (11) is configured to:

   acquire a score showing the highness of credibility of the second company based on the first information relating to the second company; and specify the first output aspect in accordance with the score.

5. The information processing apparatus (1) according to claim 4, wherein the processor (11) is configured to:

   acquire scores showing the highness of credibility of the second company based on the first information relating to the second company; and specify the first output aspect based on the scores.

6. The information processing apparatus (1) according to claim 1, wherein the processor (11) is configured to specify the first output aspect based on an output obtained when the first information relating to the second company is input to a model in which a relationship between information relating to a company and the output aspect of the first processing is constructed such that the output aspect of the warning becomes stronger as a credibility of the company becomes lower for companies.

7. The information processing apparatus (1) according to any one of claims 1 to 5, wherein the first information includes at least one of:

   information relating to a social credibility of the second company; and
   information relating to a credibility of the second company seen from the first company.

8. The information processing apparatus (1) according to claim 7, wherein the information relating to the social credibility of the second company includes information relating to an attribute of the second company.

9. The information processing apparatus (1) according to claim 8, wherein the information relating to the attribute of the second company is information relating to the second company acquired from a public institution.

10. The information processing apparatus (1) according to any of claims 7 to 9, wherein the information relating to the credibility of the second company seen from the first company includes at least one of:

   information relating to a trading relationship between the first company and the second company; and

information relating to a state of a disclosure setting of information relating to a product between the first company and the second company.

11. The information processing apparatus (1) according to claim 10, wherein the information relating to the trading relationship between the first company and the second company includes at least one of:

information indicating whether there is a product that is directly traded between the first company and the second company; and
information indicating whether the first company and the second company are included in a supply chain for a third product.

12. The information processing apparatus (1) according to claim 10 or 11, wherein the processor (11) is configured to determine a highness of credibility of the second company by giving priority to the information relating to the state of the disclosure setting of the information relating to the product between the first company and the second company over the information relating to the trading relationship between the first company and the second company when the first information includes the information relating to the credibility of the second company seen from the first company.

13. An information processing method performed by a processor (11), the method comprising:

accepting a request for setting a permission of disclosure of information relating to a first product of a first company to a second company from an account of the first company;
acquiring first information relating to the second company;
specifying a first output aspect of a warning for first processing of giving the warning in response to the request based on the first information; and
executing the first processing in the first output aspect.

14. The information processing method according to claim 13, comprising specifying the first output aspect out of output aspects each having a different strength of warning for the first processing, wherein the output aspects for the first processing includes at least an output aspect of displaying a preview of a display screen including the information relating to the first product when access is performed from an account of the second company.

15. The information processing method according to claim 13 or 14, comprising:

determining a highness of credibility of the second company based on the first information relating to the second company; and
specifying the first output aspect having a stronger strength of warning as a highness of credibility of the second company becomes lower.

# FIG. 1

100

1

2    2    2    2

DELIVERY    DELIVERY    DELIVERY

OEM COMPANY          COMPANY A          COMPANY B          COMPANY C
(Tier 0)            (Tier 1)           (Tier 2)           (Tier 3)

DOWNSTREAM                                              UPSTREAM

# FIG. 2

| Tier 0 | Tier 1 | Tier 2 | Tier 3 |
|--------|--------|--------|--------|

END PRODUCT X

PRODUCT A1

PRODUCT B1

PRODUCT C1

PRODUCT D1

. . .

PRODUCT A11

PRODUCT A12

PRODUCT A13

. . .

PRODUCT A111

PRODUCT A121

PRODUCT A122

PRODUCT A123

# FIG. 3

```
┌─────────┐  ┌──────────┐ ┌────────────┐┌────────────┐
│  END    ├──┤ PRODUCT  ├─┤UNDISCLOSED ├┤UNDISCLOSED │
│ PRODUCT │  │    A1    │ └────────────┘└────────────┘
│    X    │  └──────────┘
└─────────┘
             ┌────────────┐ ┌──────────┐┌──────────┐
             │UNDISCLOSED │─┤ PRODUCT  ├┤ PRODUCT  │
             └────────────┘ │   A12    ││   A121   │
                            └──────────┘└──────────┘
             ┌────────────┐ ┌────────────┐┌──────────┐
             │UNDISCLOSED │ │UNDISCLOSED ├┤ PRODUCT  │
             └────────────┘ └────────────┘│   A122   │
                                          └──────────┘
             ┌────────────┐ ┌────────────┐┌──────────┐
             │UNDISCLOSED │ │UNDISCLOSED ├┤ PRODUCT  │
             └────────────┘ └────────────┘│   A123   │
                                          └──────────┘
             ┌────────────┐
             │UNDISCLOSED │
             └────────────┘
```

AAA CO., LTD
PRODUCT A121

USAGE AMOUNT OF LITHIUM                              X[g]
 AMOUNT OF RECYCLED LITHIUM THEREIN X[g]
USAGE AMOUNT OF NICKEL                               X[g]
 AMOUNT OF RECYCLED NICKEL THEREIN  X[g]
USAGE AMOUNT OF COBALT                               X[g]
 AMOUNT OF RECYCLED COBALT THEREIN X[g]
USAGE AMOUNT OF LEAD                                 X[g]
 AMOUNT OF RECYCLED LEAD THEREIN     X[g]

CARBON DIOXIDE EMISSION AMOUNT
                                        [UNDISCLOSED]

DD INFORMATION                          ...

# FIG. 4

SERVER APPARATUS 1

CONTROL UNIT 11
- CPU
- RAM
- ROM

STORAGE UNIT 12
- PROGRAM
- ACCOUNT INFORMATION
- PRODUCT INFORMATION
- COMPANY INFORMATION
- SETTING INFORMATION OF STORAGE REGION

COMMUNICATION MODULE 13

INPUT-OUTPUT APPARATUS 14

# FIG. 5

2

COMPANY TERMINAL

21

CONTROL UNIT

CPU

RAM

ROM

STORAGE UNIT

22

PROGRAM

COMMUNICATION MODULE

23

INPUT-OUTPUT APPARATUS

24

# FIG. 6

1

SERVER APPARATUS

11

CONTROL UNIT

112

PRIVILEGE SETTING UNIT

114

INFORMATION PROVIDING UNIT

12

STORAGE UNIT

STORAGE REGION

PRODUCT INFORMATION

STORAGE REGION

PRODUCT INFORMATION

ACCOUNT INFORMATION

COMPANY INFORMATION

STORAGE REGION SETTING INFORMATION

•
•
•

# FIG. 7

| COMPANY ID | | C001 |
|---|---|---|
| COMPANY NAME | | COMPANY A |
| PRODUCT ID | | P001 |
| PRODUCT NAME | | PRODUCT A |
| LINKING-RELATED INFORMATION | UPSTREAM PRODUCT INFORMATION | POINTER |
| | TERMINAL FLAG | NONE |
| TRACEABILITY-RELATED INFORMATION | MATERIAL USAGE AMOUNT (LITHIUM) | X1[g] |
| | MATERIAL USAGE AMOUNT (NICKEL) | X2[g] |
| | MATERIAL USAGE AMOUNT (COBALT) | X3[g] |
| | MATERIAL USAGE AMOUNT (LEAD) | X4[g] |
| | $CO_2$ EMISSION AMOUNT AT TIME OF PRODUCTION | X5[g] |
| | DD INFORMATION | . . . |
| . . . | | . . . |

# FIG. 8

# FIG. 9

DISCLOSURE PERMISSION SETTING SCREEN
[DISCLOSURE SOURCE COMPANY: AAA CO., LTD]

PRODUCT NUMBER
OF PRODUCT

DISCLOSURE DESTINATION
COMPANY SETTING

PERMITTED ITEM

P001

☐ A CO., LTD
☐ B CO., LTD
☑ C CO., LTD
☐ D CO., LTD
☐ E CO., LTD
☐ F CO., LTD

☐ ALL ITEMS
☑ COMPANY NAME
☑ PRODUCT NUMBER
   OF OWN COMPANY
☑ PRODUCT NUMBER
   OF OTHER PARTY
☑ REQUIRED AMOUNT
☑ EMISSION INTENSITY
☐ ···

DISCLOSURE
SETTING

# FIG. 10

DISCLOSURE PERMISSION SETTING SCREEN
[DISCLOSURE SOURCE COMPANY: AAA CO., LTD]

DISCLOSURE DESTINATION
COMPANY SETTING

PRODUCT NUMBER
OF PRODUCT

PERMITTED ITEM

A CO., LTD

☑ P001
☐ P002
☑ P003
☐ P004
☑ P005
☐ ···

☐ ALL ITEMS
☑ COMPANY NAME
☑ PRODUCT NUMBER
   OF OWN COMPANY
☑ PRODUCT NUMBER
   OF OTHER PARTY
☑ REQUIRED AMOUNT
☑ EMISSION INTENSITY
☐ ···

DISCLOSURE
SETTING

# FIG. 11

| DEDICATED STORAGE REGION A OF COMPANY A | STORAGE REGION AB SHARED BETWEEN COMPANIES A AND B | DEDICATED STORAGE REGION B OF COMPANY B |
|---|---|---|
| PRODUCT INFORMATION A | PRODUCT INFORMATION A | |

PRIVILEGE SETTING UNIT ~ 112

GENERATE PRODUCT TREE BASED ON PRODUCT INFORMATION

REQUEST FOR SETTING PERMISSION OF DISCLOSURE FOR DISCLOSING PRODUCT INFORMATION A TO COMPANY B

INFORMATION PROVIDING UNIT ~ 114

WARNING IN OUTPUT ASPECT IN ACCORDANCE WITH CREDIBILITY OF COMPANY B

SET PERMISSION OF DISCLOSURE FOR COMPANY B BY COPYING PRODUCT INFORMATION A TO SHARED REGION

# FIG. 12

DISCLOSURE DESTINATION SETTING
[DISCLOSURE SOURCE COMPANY: AAA CO., LTD]

PRODUCT NUMBER
OF PRODUCT

DISCLOSURE DESTINATION
COMPANY SETTING

PERMITTED ITEM

P001

☐ ALL ITEMS
COMPANY NAME
PRODUCT NUMBER
 OF OWN COMPANY
PRODUCT NUMBER
 OF OTHER PARTY
REQUIRED AMOUNT
EMISSION INTENSITY
☐ ...

PRODUCT P00001 WILL BE DISCLOSED
TO C CO., LTD.

CONFIRM     CANCEL

☐ F CO., LTD

DISCLOSURE
SETTING

# FIG. 13

DISCLOSURE DESTINATION SETTING
[DISCLOSURE SOURCE COMPANY: AAA CO., LTD]

PRODUCT NUMBER
OF PRODUCT

DISCLOSURE DESTINATION
COMPANY SETTING

PERMITTED ITEM

P001

PERFORM DISCLOSURE SETTING?

PREVIEW IN DISCLOSURE DESTINATION COMPANY

NAME
NUMBER
COMPANY
 NUMBER
PARTY
AMOUNT
INTENSITY

AAA CO., LTD
PRODUCT A121
USAGE AMOUNT OF LITHIUM                    X[g]
  AMOUNT OF RECYCLED LITHIUM THEREIN X[g]
USAGE AMOUNT OF NICKEL                     X[g]
  AMOUNT OF RECYCLED NICKEL THEREIN  X[g]
USAGE AMOUNT OF COBALT                     X[g]
  AMOUNT OF RECYCLED COBALT THEREIN X[g]
USAGE AMOUNT OF LEAD                       X[g]
  AMOUNT OF RECYCLED LEAD THEREIN    X[g]

CANCEL

CONFIRM

DISCLOSURE
SETTING

# FIG. 14

DISCLOSURE DESTINATION SETTING
[DISCLOSURE SOURCE COMPANY: AAA CO., LTD]

PRODUCT NUMBER
OF PRODUCT

DISCLOSURE DESTINATION
COMPANY SETTING

PERMITTED ITEM

P001

**⟫CAUTION!!!⟪**

DISCLOSE PRODUCT P00001 TO C CO. LTD?

CANCEL          CONFIRM

NUMBER
COMPANY
NUMBER
ARTY
AMOUNT
INTENSITY

DISCLOSURE
SETTING

# FIG. 15

DISCLOSURE PERMISSION
SETTING ACCEPTANCE
PROCESSING

OP101

IS REQUEST
FOR SETTING PERMISSION OF
DISCLOSURE RECEIVED?

NO

YES

COLLECT INFORMATION RELATING TO
DISCLOSURE DESTINATION COMPANY

OP102

SPECIFY OUTPUT ASPECT
OF WARNING

OP103

TRANSMIT WARNING OF
SPECIFIED OUTPUT ASPECT

OP104

OP105

IS CONFIRMATORY
RESPONSE RECEIVED?

NO

YES

SET PERMISSION OF DISCLOSURE
OF PRODUCT INFORMATION TO
DISCLOSURE DESTINATION
COMPANY

OP106

END

# FIG. 16

| CONDITION | SCORE |
|---|---|
| ADDRESS OF HEADQUARTERS IS UNFAVORABLE COUNTRY | -10 |
| THERE IS SHARED STORAGE REGION | +5 |
| THERE IS INVITATION TO SYSTEM | +3 |
| THERE IS DIRECTLY TRADED PRODUCT | +2 |
| BOTH ARE SUPPLIERS OF SAME TYPE OF PARTS FOR SAME END PRODUCT | -3 |
| BOTH ARE IN SAME Tier LEVEL IN SAME END PRODUCT | -2 |
| ... | ... |

# FIG. 17

```
┌─────────────────────────────────────────────────────────┐
│ ADDRESS OF HEADQUARTERS IS UNFAVORABLE COUNTRY          │
└─────────────────────────────────────────────────────────┘
   YES                                         NO

                                    ┌──────────────────┐
                        YES         │ THERE IS SHARED  │
                                    │ STORAGE REGION   │
                                    └──────────────────┘
                                            NO

                                    ┌──────────────────┐
                        YES         │ THERE IS INVITATION│
                                    │ TO SYSTEM        │
                                    └──────────────────┘
                                            NO

                                    ┌──────────────────┐
                                    │ THERE IS DIRECTLY│    YES
                                    │ TRADED PRODUCT   │
                                    └──────────────────┘
                                            NO

                                    ┌──────────────────┐
                                    │ BOTH ARE         │
                        YES         │ SUPPLIERS OF     │
                                    │ SAME TYPE OF     │
                                    │ PARTS FOR SAME   │
                                    │ END PRODUCT      │
                                    └──────────────────┘
                                            NO

                                    ┌──────────────────┐
                                    │ BOTH ARE         │
                                    │ IN SAME Tier LEVEL│   NO
                                    │ IN SAME END      │
                                    │ PRODUCT          │
                                    └──────────────────┘
                                            YES
```

| CREDIBILITY LEVEL 1 | CREDIBILITY LEVEL 5 | CREDIBILITY LEVEL 2 | CREDIBILITY LEVEL 3 | CREDIBILITY LEVEL 4 |

# FIG. 18

HIGH
CREDIBILITY

WEAK
WARNING

| CREDIBILITY LEVEL 5 | OUTPUT ASPECT 1 |
|---|---|
| CREDIBILITY LEVEL 4 | OUTPUT ASPECT 2 |
| CREDIBILITY LEVEL 3 | OUTPUT ASPECT 3 |
| CREDIBILITY LEVEL 2 | OUTPUT ASPECT 4 |
| CREDIBILITY LEVEL 1 | OUTPUT ASPECT 5 |

LOW
CREDIBILITY

STRONG
WARNING

# FIG. 19

• UNFAVORABLE COUNTRY Y/N
• SHARED STORAGE REGION
  PRESENT/ABSENT
• INVITATION TO SYSTEM
  PRESENT/ABSENT
• DIRECTLY TRADED PRODUCT
  PRESENT/ABSENT
• SUPPLIERS OF SAME TYPE OF PARTS
  FOR SAME END PRODUCT Y/N
• SAME Tier LEVEL IN SAME END
  PRODUCT Y/N

MODEL

PROBABILITY OF
OUTPUT ASPECT 1
PROBABILITY OF
OUTPUT ASPECT 2
PROBABILITY OF
OUTPUT ASPECT 3
PROBABILITY OF
OUTPUT ASPECT 4
PROBABILITY OF
OUTPUT ASPECT 5

Europäisches
Patentamt
European
Patent Office
Office européen
des brevets

# EUROPEAN SEARCH REPORT

**Application Number**

EP 24 15 8731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/383244 A1 (ISHII MASAHIKO [JP] ET AL) 1 December 2022 (2022-12-01) <br> * paragraph [0008] - paragraph [0008] * <br> * paragraph [0047] - paragraph [0054] * <br> * paragraph [0066] - paragraph [0067] * <br> * figures 1,2 * | 1-15 | INV. <br> G06Q10/0635 <br> G06Q10/10 <br> G06Q30/018 |
| A | KEMBRO JOAKIM ET AL: "Information sharing across multiple supply chain tiers: A Delphi study on antecedents", INTERNATIONAL JOURNAL OF PRODUCTION ECONOMICS, vol. 193, 29 June 2017 (2017-06-29), pages 77-86, XP085225498, ISSN: 0925-5273, DOI: 10.1016/J.IJPE.2017.06.032 <br> * the whole document * | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 26 June 2024 | Melis, Caterina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8731

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| US 2022383244 A1 | 01-12-2022 | CN 115409640 A | 29-11-2022 |
| | | EP 4095779 A1 | 30-11-2022 |
| | | JP 2022182766 A | 08-12-2022 |
| | | KR 20220161189 A | 06-12-2022 |
| | | US 2022383244 A1 | 01-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017500663 A